# EUROPÄISCHE PATENTANMELDUNG

(11) **EP 3 136 410 A1**
(43) Veröffentlichungstag der Anmeldung: **01.03.2017**
(21) Anmeldenummer: 15182453.9
(22) Anmeldetag: 26.08.2015
(51) Int. Cl.: H01G 11/48, H01M 4/60, C08G 61/02, C08F 38/00

(54) **VERWENDUNG BESTIMMTER POLYMERE ALS LADUNGSSPEICHER**

(71) Anmelder: Evonik Degussa GmbH, 45128 Essen (DE)
(72) Erfinder: SCHUBERT, Ulrich, 07743 Jena (DE); WILD, Andreas, 99423 Weimar (DE); HÄUPLER, Bernhard, 91052 Erlangen (DE)

(57) **Zusammenfassung**

Die vorliegende Erfindung betrifft Polymere sowie deren Verwendung in Form von aktivem Elektrodenmaterial oder in einem Elektrodenslurry als elektrische Ladungsspeicher, wobei die elektrischen Ladungsspeicher insbesondere Sekundärbatterien sind. Diese Sekundärbatterien zeichnen sich insbesondere durch hohe Zellspannungen, auch bei Durchlaufen mehrerer Lade-und Entladezyklen, sowie einfache und skalierbare Verarbeitungs- und Herstellungsmethoden (zum Beispiel mittels Siebdruck) aus.

## Beschreibung

Die vorliegende Erfindung betrifft Polymere sowie deren Verwendung in Form von aktivem Elektrodenmaterial oder in einem Elektrodenslurry als elektrische Ladungsspeicher, wobei die elektrischen Ladungsspeicher insbesondere Sekundärbatterien sind. Diese Sekundärbatterien zeichnen sich insbesondere durch hohe Zellspannungen, einen geringen Kapazitätsabfall auch bei Durchlaufen mehrerer Lade- und Entladezyklen, große Leistungsdichten sowie einfache und skalierbare Verarbeitungs- und Herstellungsmethoden (zum Beispiel mittels Siebdruck) aus.

### Hintergrund der Erfindung

Organische Batterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Als aktives Elektrodenmaterialien zur Ladungsspeicherung sind im Stand der Technik verschiedene polymere Strukturen beschrieben worden, so zum Beispiel polymere Verbindungen mit organischen Nitroxidradikalen als aktiven Einheiten (beispielsweise in WO 2012133202 A1, WO 2012133204 A1, WO 2012120929 A1, WO 2012153866 A1, WO 2012153865 A1, JP 2012-221574 A, JP 2012-221575 A , JP 2012-219109 A, JP 2012-079639 A, WO 2012029556 A1, WO 2012153865 A1, JP 2011-252106 A, JP 2011-074317 A, JP 2011-165433 A, WO 2011034117 A1, WO 2010140512 A1, WO 2010104002 A1, JP 2010-238403 A, JP 2010-163551 A, JP 2010-114042 A, WO 2010002002 A1, WO 2009038125 A1, JP 2009-298873 A, WO 2004077593 A1, WO 2009145225 A1, JP 2009-238612 A, JP 2009-230951 A, JP 2009-205918 A, JP 2008-234909 A, JP 2008-218326 A, WO 2008099557 A1, WO 2007141913 A1, US 20020041995 A1, EP 1128453 A2; A. Vlad, J. Rolland, G. Hauffman, B. Ernould, J.-F. Gohy, ChemSusChem 2015, 8, 1692 - 1696) oder polymere Verbindungen mit organischen Phenoxylradikalen oder Galvinoxylradikalen als aktiven Einheiten (zum Beispiel US 2002/0041995 A1, JP 2002-117852 A).

Auch polymere Verbindungen mit Chinonen (beispielsweise JP 2009-217992 A, WO 2013/099567 A1, WO 2011/068217 A1), mit Dionen (beispielsweise JP 2010-212152 A), sowie mit Dicyanodiiminen (beispielsweise JP 2012-190545 A, JP 2010-55923 A) als aktive Einheiten zur Ladungsspeicherung sind bekannt.

Auch Polymere, welche Dialkoxybenzol aufweisen, sind im Stand der Technik für eine Vielzahl verschiedener Anwendungen beschrieben. Dazu gehört ihre Anwendung als Epoxidharze zum Verschließen von Halbleitermodulen (zum Beispiel beschrieben in JP 2013098217 A, JP 2012224758 A, JP 2011231153 A, JP 2011138037 A, JP 2010282154 A, JP 2010266556 A, JP 2010077303 A, JP 2008296436 A oder WO 2004098745 A1), Weiterhin wurden dialkoxybenzolhaltige, nicht-polymere Verbindungen als *"redox-shuttle"* Additive für Li-Ionen Batterien verwendet, um ein Überladen der Li-Batterie zu verhindern (WO 2011/149970 A2). Daneben wird auch die Verwendung bestimmter Polymere auf Basis von Dialkoxybenzolen als elektrische Ladungsspeicher beschrieben (P. Nesvadba, L. B. Folger, P. Maire, P. Novak, Synth. Met. 2011, 161, 259-262, im Folgenden abgekürzt als "Nesvadba *et al*."; W. Weng, Z. C. Zhang, A. Abouimrane, P. C. Redfern, L. A. Curtiss, K. Amine, Adv. Funct. Mater. 2012, 22, 4485-4492, im Folgenden abgekürzt als "Weng *et al.*"). Diese von Nesvadba *et al.* und Weng *et al.* beschriebenen Polymere weisen jedoch mehrere Nachteile auf. Zwar besitzen diese ein Redoxpotential, welches über dem der häufig verwendeten Nitroxidradikale liegt und ermöglichen somit höhere Zellspannungen bei Verwendung der dialkoxybenzolhaltigen Polymere als Kathodenmaterial, allerdings zeigen Batterien, welche mit diesen literaturbeschriebenen Polymeren hergestellt wurden, nur geringe Entladekapazitäten. Somit ist es wünschenswert und deshalb Aufgabe der Erfindung, Polymere zur Verfügung zu stellen, mit welchen eine noch höhere Zellspannung, höhere Kapazität und somit höhere spezifische Energie erreicht werden kann. Daneben ist der Syntheseaufwand ein weiteres Kriterium für die Einsetzbarkeit organischer Materialien als aktive Elektrodenmaterialien. Es war deshalb die weitere Aufgabe der vorliegenden Erfindung, möglichst einfach synthetisierbare Polymere zur Verfügung zu stellen.

### Detaillierte Beschreibung der Erfindung

Es wurden nun überraschend Polymere gefunden, welche die vorstellig genannten Aufgaben lösen.

Die vorliegende Erfindung betrifft demnach ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 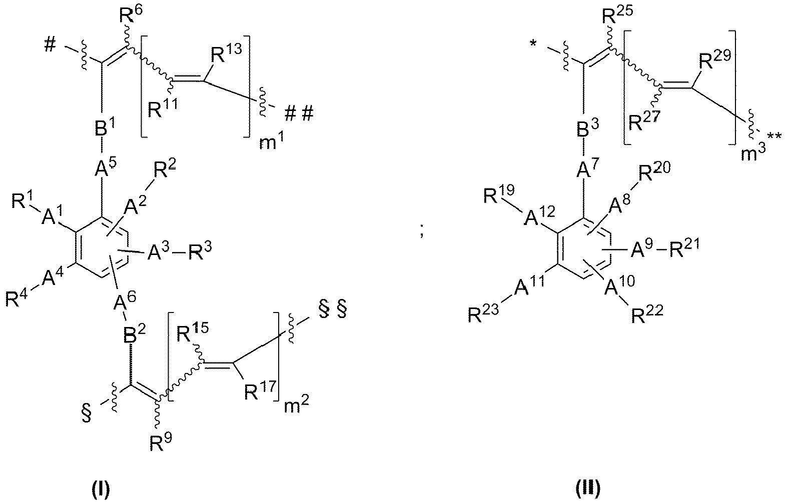 wobei n¹ und n² unabhängig voneinander jeweils eine ganze Zahl ≥ 4 sind, wobei m¹, m², m³ unabhängig voneinander jeweils eine ganze Zahl ≥ 0 sind, wobei die Wiederholungseinheiten der chemischen Struktur **(I)** innerhalb des Polymers gleich oder zumindest teilweise voneinander verschieden sind, wobei die Wiederholungseinheiten der chemischen Struktur **(II)** innerhalb des Polymers gleich oder zumindest teilweise voneinander verschieden sind, wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist, wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²², R²³, R²⁵, R²⁷, R²⁹ unabhängig voneinander jeweils aus der Gruppe bestehend aus
Wasserstoff, (hetero)aromatischer Rest, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
ausgewählt sind,
wobei mindestens zwei von A¹, A², A³, A⁴, A⁵, A⁶ jeweils für ein Sauerstoff- oder Schwefelatom stehen und die übrigen von A¹, A², A³, A⁴, A⁵, A⁶ jeweils für eine direkte Bindung stehen,
wobei mindestens zwei von A⁷, A⁸, A⁹, A¹⁰, A¹¹, A¹² jeweils für ein Sauerstoff- oder Schwefelatom stehen und die übrigen von A⁷, A⁸, A⁹, A¹⁰, A¹¹, A¹² jeweils für eine direkte Bindung stehen,
und wobei mindestens zwei in *ortho*-Stellung zueinander stehende Reste der Reste R¹, R², R³, R⁴ und/oder mindestens zwei in *ortho*-Stellung zueinander stehende Reste der Reste R¹⁹, R²⁰, R²¹, R²², R²³ jeweils auch durch mindestens einen (hetero)aromatischen Ring oder gegebenenfalls mit mindestens einer Gruppe ausgewählt aus Nitrogruppe, -NH₂, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können,
und wobei der Rest R¹ im Falle dass A¹ = direkte Bindung, der Rest R² im Falle dass A² = direkte Bindung, der Rest R³ im Falle dass A³ = direkte Bindung, der Rest R⁴ im Falle dass A⁴ = direkte Bindung, der Rest R¹⁹ im Falle dass A¹² = direkte Bindung, der Rest R²⁰ im Falle dass A⁸ = direkte Bindung, der Rest R²¹ im Falle dass A⁹ = direkte Bindung, der Rest R²² im Falle dass A¹⁰ = direkte Bindung, der Rest R²³ im Falle dass A¹¹ = direkte Bindung sowie die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -COOR³⁶, -C(=O)NHR³⁷, -NR³⁸R³⁹, wobei R³⁶, R³⁷, R³⁸, R³⁹ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
ausgewählt sein können,
und wobei die Reste R⁶, R⁹, R¹¹, R¹³, R¹⁵, R¹⁷, R²⁵, R²⁷, R²⁹ unabhängig voneinander auch ein Rest der Formel -O-R⁴⁰, wobei R⁴⁰ ein gegebenenfalls mindestens eine Gruppe ausgewählt aus Nitrogruppe, -NH₂, -CN, -SH, -OH, Halogen substituierter und gegebenenfalls mit mindestens einer Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei B¹ im Falle dass A⁵ = O oder S, B² im Falle dass A⁶ = O oder S, B³ im Falle dass A⁷ = O oder S unabhängig voneinander aus der Gruppe bestehend aus
direkte Bindung,

&-(X¹)ₚ₁-[C=X²]ₚ₂-(X³)ₚ₃-B⁵-(Y²)_{q2}-[C=Y¹]_{q1}-&&,

&-(Y³)_{q3}-(C=Y⁴)-&&,

ausgewählt sind,
und wobei B¹ im Falle dass A⁵ = direkte Bindung, B² im Falle dass A⁶ = direkte Bindung, B³ im Falle dass A⁷ = direkte Bindung unabhängig voneinander aus der Gruppe bestehend aus

&-(X⁴)ₚ₄-[C=X⁵]ₚ₅-(X⁶)ₚ₆-B⁶-(Y⁷)_{q6}-[C=Y⁶]_{q5}-(Y⁵)_{q4}-&&,

&-(Y¹⁰)_{q9}-(C=Y⁹)_{q8}-(Y⁸)_{q7}-&&,

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei X², X⁵, Y¹, Y⁴, Y⁶, Y⁹ unabhängig voneinander ausgewählt aus der Gruppe bestehend aus Sauerstoff, Schwefel sind,
wobei X¹, X³, X⁴, X⁶, Y², Y³, Y⁷, Y¹⁰ unabhängig voneinander ausgewählt aus der Gruppe bestehend aus O, S, NH, N-Alkyl sind,
wobei Y⁵, Y⁸ aus NH, N-Alkyl ausgewählt ist,
wobei B⁵, B⁶ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest sind,
ausgewählt sind,
und wobei "&&" für B¹ die zu A⁵ weisende Bindung bezeichnet, für B² die zu A⁶ weisende Bindung bezeichnet, für B³ die zu A⁷ weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft.

Das erfindungsgemäße Polymer nach Punkt 1 kann dabei insbesondere n¹ miteinander verknüpfte Wiederholungseinheiten der chemischen Struktur **(I)** mit den vorstehend angegebenen Bedeutungen von R¹, R², R³, R⁴, R⁶, R⁹, R¹¹, R¹³, R¹⁵, R¹⁷, A¹ bis A⁶, B¹, B², m¹, m² umfassen. Das erfindungsgemäße Polymer nach Punkt 1 kann dabei alternativ insbesondere n² miteinander verknüpfte Wiederholungseinheiten der chemischen Struktur **(II)** mit den vorstehend angegebenen Bedeutungen von R¹⁹, R²⁰, R²¹, R²², R²³, R²⁵, R²⁷, R²⁹, A⁷ bis A¹², B³, m³ umfassen.

2. Insbesondere betrifft die vorliegende Erfindung ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 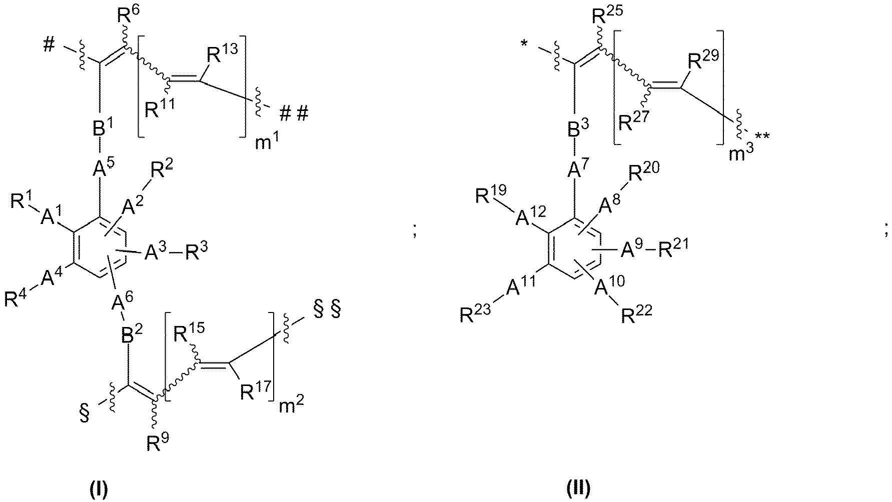 wobei n¹ und n² unabhängig voneinander jeweils eine ganze Zahl ≥ 4, insbesondere ≥ 4 und ≤ 5000, sind,
wobei m¹, m², m³ unabhängig voneinander jeweils eine ganze Zahl ≥ 0, insbesondere ≥ 0 und ≤ 5000, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²², R²³, R²⁵, R²⁷, R²⁹ unabhängig voneinander jeweils aus der Gruppe bestehend aus
Wasserstoff, Phenyl, Benzyl,
gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
und insbesondere aus der Gruppe bestehend aus Wasserstoff, Alkylgruppe mit 1 bis 30 Kohlenstoffatomen,
ausgewählt sind,
und wobei die Reste R¹¹, R¹³, R¹⁵, R¹⁷ unabhängig voneinander jeweils auch eine Gruppe der allgemeinen Struktur **(III)** mit 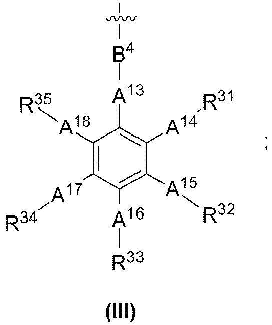 worin die Reste R³¹, R³², R³³, R³⁴, R³⁵ unabhängig voneinander die für R¹ angegebene Bedeutung haben und insbesondere unabhängig voneinander jeweils eine Alkylgruppe mit 1 bis 30 Kohlenstoffatomen sind, sein können,
wobei mindestens, insbesondere genau, zwei von A¹, A², A³, A⁴, A⁵, A⁶ jeweils für ein Sauerstoff- oder Schwefelatom, insbesondere ein Sauerstoffatom, stehen und die übrigen von A¹, A², A³, A⁴, A⁵, A⁶ jeweils für eine direkte Bindung stehen,
wobei mindestens, insbesondere genau, zwei von A⁷, A⁸, A⁹, A¹⁰, A¹¹, A¹² jeweils für ein Sauerstoff- oder Schwefelatom, insbesondere ein Sauerstoffatom, stehen und die übrigen von A⁷, A⁸, A⁹, A¹⁰, A¹¹, A¹² jeweils für eine direkte Bindung stehen,
wobei mindestens, insbesondere genau, zwei von A¹³, A¹⁴, A¹⁵, A¹⁶, A¹⁷, A¹⁸ jeweils für ein Sauerstoff- oder Schwefelatom, insbesondere ein Sauerstoffatom, stehen und die übrigen von A¹³, A¹⁴, A¹⁵, A¹⁶, A¹⁷, A¹⁸ jeweils für eine direkte Bindung stehen,
und wobei mindestens zwei in *ortho*-Stellung zueinander stehende Reste der Reste R¹, R², R³, R⁴ und/oder mindestens zwei in *ortho*-Stellung zueinander stehende Reste der Reste R¹⁹, R²⁰, R²¹, R²², R²³ und/oder mindestens zwei in *ortho*-Stellung zueinander stehende Reste der Reste R³¹, R³², R³³ R³⁴, R³⁵ jeweils auch durch mindestens einen (hetero)aromatischen Ring oder gegebenenfalls mit mindestens einer Gruppe ausgewählt aus Nitrogruppe, -NH₂, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können,
und wobei der Rest R¹ im Falle dass A¹ = direkte Bindung, der Rest R² im Falle dass A² = direkte Bindung, der Rest R³ im Falle dass A³ = direkte Bindung, der Rest R⁴ im Falle dass A⁴ = direkte Bindung, der Rest R¹⁹ im Falle dass A¹² = direkte Bindung, der Rest R²⁰ im Falle dass A⁸ = direkte Bindung, der Rest R²¹ im Falle dass A⁹ = direkte Bindung, der Rest R²² im Falle dass A¹⁰ = direkte Bindung, der Rest R²³ im Falle dass A¹¹ = direkte Bindung, der Rest R³¹ im Falle dass A¹⁴ = direkte Bindung, der Rest R³² im Falle dass A¹⁵ = direkte Bindung, der Rest R³³ im Falle dass A¹⁶ = direkte Bindung, der Rest R³⁴ im Falle dass A¹⁷ = direkte Bindung, der Rest R³⁵ im Falle dass A¹⁸ = direkte Bindung sowie die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -COOR³⁶, -C(=O)NHR³⁷, -NR³⁸R³⁹, wobei R³⁶, R³⁷, R³⁸, R³⁹ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist,
ausgewählt sein können,
und wobei die Reste R⁶, R⁹, R¹¹, R¹³, R¹⁵, R¹⁷, R²⁵, R²⁷, R²⁹ unabhängig voneinander auch ein Rest der Formel -O-R⁴⁰, wobei R⁴⁰ ein gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei B¹ im Falle dass A⁵ = O oder S, B² im Falle dass A⁶ = O oder S, B³ im Falle dass A⁷ = O oder S, B⁴ im Falle dass A¹³ = O oder S unabhängig voneinander aus der Gruppe bestehend aus
direkte Bindung,

&-(X¹)ₚ₁-[C=X²]ₚ₂-(X³)ₚ₃-B⁵-(Y²)_{q2}-[C=Y¹]_{q1}-&&,

&-(Y³)_{q3}-(C=Y⁴)-&&,

ausgewählt sind,
und wobei B¹ im Falle dass A⁵ = direkte Bindung, B² im Falle dass A⁶ = direkte Bindung, B³ im Falle dass A⁷ = direkte Bindung, B⁴ im Falle dass A¹³ = direkte Bindung unabhängig voneinander aus der Gruppe bestehend aus

&-(X⁴)ₚ₄-[C=X⁵]ₚ₅-(X⁶)ₚ₆-B⁶-(Y⁷)_{q6}-[C=Y⁶]_{q5}-(Y⁵)_{q4}-&&,

&-(Y¹⁰)_{q9}-(C=Y⁹)_{q8}-(Y⁸)_{q7}-&&,

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei X², X⁵, Y¹, Y⁴, Y⁶, Y⁹ unabhängig voneinander ausgewählt aus der Gruppe bestehend aus Sauerstoff, Schwefel sind,
wobei X¹, X³, X⁴, X⁶, Y², Y³, Y⁷, Y¹⁰ unabhängig voneinander ausgewählt aus der Gruppe bestehend aus O, S, NH, N-Alkyl, wobei die Alkylgruppe insbesondere 1 bis 10 Kohlenstoffatome aufweist, sind,
wobei Y⁵, Y⁸ aus NH, N-Alkyl, wobei die Alkylgruppe insbesondere 1 bis 10 Kohlenstoffatome aufweist, ausgewählt ist,
wobei B⁵, B⁶ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
und wobei insbesondere B⁵, B⁶ unabhängig voneinander jeweils ein zweiwertiger, gegebenenfalls mindestens eine Gruppe ausgewählt aus Ether, Thioether, Aminoether aufweisender aliphatischer Rest sind,
ausgewählt sind,
und wobei "&&" für B¹ die zu A⁵ weisende Bindung bezeichnet, für B² die zu A⁶ weisende Bindung bezeichnet, für B³ die zu A⁷ weisende Bindung bezeichnet, für B⁴ die zu A¹³ weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft, für B⁴ die Bindung bezeichnet, welche B⁴ mit der Doppelbindung verknüpft.

Das erfindungsgemäße Polymer nach Punkt 2 kann dabei insbesondere n¹ miteinander verknüpfte Wiederholungseinheiten der chemischen Struktur **(I)** mit den vorstehend angegebenen Bedeutungen von R¹, R², R³, R⁴, R⁶, R⁹, R¹¹, R¹³, R¹⁵, R¹⁷ A¹ bis A⁶, B¹, B², m¹, m² umfassen.

Das erfindungsgemäße Polymer nach Punkt 2 kann dabei alternativ insbesondere n² miteinander verknüpfte Wiederholungseinheiten der chemischen Struktur **(II)** mit den vorstehend angegebenen Bedeutungen von R¹⁹, R²⁰, R²¹, R²², R²³, R²⁵, R²⁷, R²⁹, A⁷ bis A¹², B³, m³ umfassen.

3. In einer bevorzugten Ausführungsform betrifft die vorliegende Erfindung ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 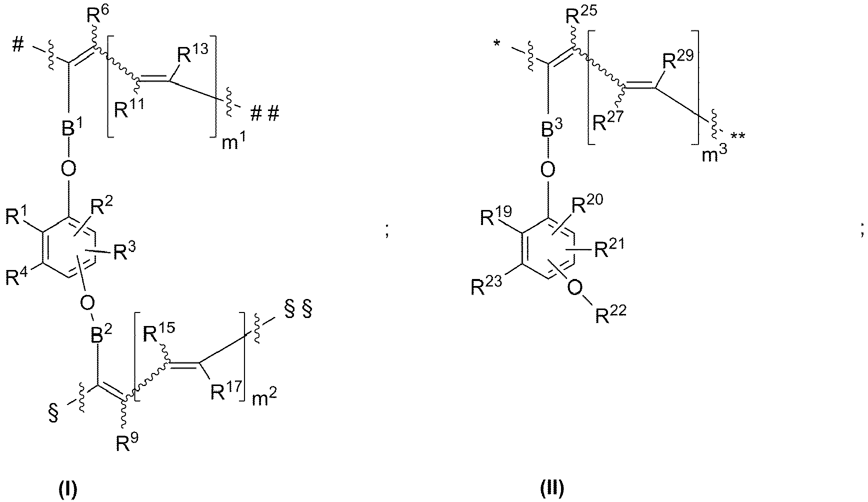 wobei n¹ und n² unabhängig voneinander jeweils eine ganze Zahl ≥ 4 und ≤ 5000, insbesondere ≥ 10 und ≤ 1000, sind,
wobei m¹, m², m³ unabhängig voneinander jeweils eine ganze Zahl ≥ 0 und ≤ 5000, insbesondere ≥ 0 und ≤ 1000, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²³, R²⁵, R²⁷, R²⁹ unabhängig voneinander jeweils aus der Gruppe bestehend aus
Wasserstoff, Alkylgruppe mit 1 bis 30, insbesondere 1 bis 8, Kohlenstoffatomen,
ausgewählt sind,
und wobei R²² eine Alkylgruppe mit 1 bis 30, insbesondere 1 bis 8, Kohlenstoffatomen ist,
und wobei die Reste R¹¹, R¹³, R¹⁵, R¹⁷ unabhängig voneinander jeweils auch eine Gruppe der allgemeinen Struktur **(III)** mit 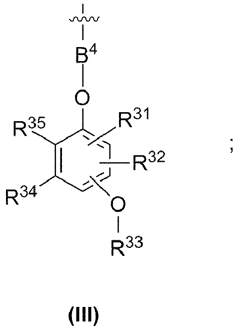 wobei die Reste R³¹, R³², R³⁴, R³⁵ unabhängig voneinander jeweils aus der Gruppe bestehend aus
Wasserstoff, Alkylgruppe mit 1 bis 30, insbesondere 1 bis 8, Kohlenstoffatomen, ausgewählt sind,
und wobei R³³ eine Alkylgruppe mit 1 bis 30, insbesondere 1 bis 8, Kohlenstoffatomen ist, sein können,
und wobei die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 30, insbesondere 1 bis 8, Kohlenstoffatomen ist,
ausgewählt sein können,
wobei B¹, B², B³, B⁴ unabhängig voneinander aus der Gruppe bestehend aus
direkte Bindung,

&-(X¹)ₚ₁-[C=X²]ₚ₂-(X³)ₚ₃-B⁵-(Y²)_{q2}-[C=Y¹]_{q1}-&&,

&-(Y³)_{q3}-(C=Y⁴)-&&,

insbesondere aus der Gruppe bestehend aus
direkte Bindung,

&-(O)ₚ₁-[C=O]ₚ₂-(O)ₚ₃-B⁵-&&,

ausgewählt sind,
wobei p1, p2, p3 jeweils 0 oder 1 mit der Maßgabe, dass nicht gleichzeitig p1 = p3 = 1 und p2 = 0 ist, sind,
wobei q1, q2 jeweils 0 oder 1 sind, wobei wenn q1 = 0, dann q2 = 0,
wobei q3 = 0 oder 1 ist,
wobei X², Y¹, Y⁴ unabhängig voneinander ausgewählt aus der Gruppe bestehend aus Sauerstoff, Schwefel und insbesondere X² = Y¹ = Y⁴ = O sind,
wobei X¹, X³, Y², Y³ unabhängig voneinander ausgewählt aus der Gruppe bestehend aus O, S und insbesondere X¹ = X³ = Y² = Y³ = O sind,
und wobei B⁵ ausgewählt aus der Gruppe bestehend aus &-Phenylen-CH₂-&&, ein zweiwertiger, gegebenenfalls mindestens eine Gruppe ausgewählt aus Ether, Thioether, Aminoether aufweisender aliphatischer Rest ist, insbesondere eine Alkylengruppe mit noch bevorzugter 1 bis 30 Kohlenstoffatomen ist,
und wobei "&&" für B¹ die zu A⁵ = Sauerstoff weisende Bindung bezeichnet, für B² die zu A⁶ = Sauerstoff weisende Bindung bezeichnet, für B³ die zu A⁷ = Sauerstoff weisende Bindung bezeichnet, für B⁴ die zu A¹³ = Sauerstoff weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft, für B⁴ die Bindung bezeichnet, welche B⁴ mit der Doppelbindung verknüpft.

Das erfindungsgemäße Polymer nach Punkt 3 kann dabei insbesondere n¹ miteinander verknüpfte Wiederholungseinheiten der chemischen Struktur **(I)** mit den vorstehend angegebenen Bedeutungen von R¹, R², R³, R⁴, R⁶, R⁹, R¹¹, R¹³, R¹⁵, R¹⁷, B¹, B², m¹, m² umfassen.
Das erfindungsgemäße Polymer nach Punkt 1 kann dabei alternativ insbesondere n² miteinander verknüpfte Wiederholungseinheiten der chemischen Struktur **(II)** mit den vorstehend angegebenen Bedeutungen von R¹⁹, R²⁰, R²¹, R²², R²³, R²⁵, R²⁷, R²⁹, B³, m³ umfassen.

4. In einer bevorzugteren Ausführungsform betrifft die vorliegende Erfindung ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 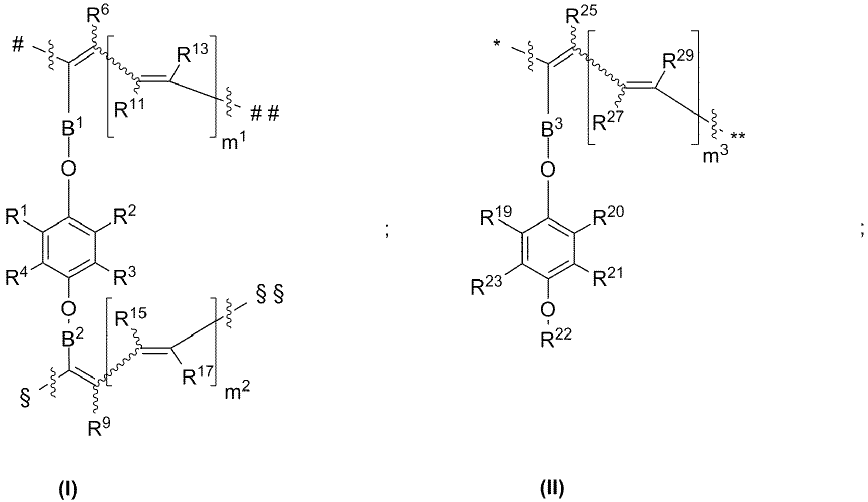 wobei n¹ und n² unabhängig voneinander jeweils eine ganze Zahl ≥ 10 und ≤ 1000, sind,
wobei m¹, m², m³ unabhängig voneinander jeweils eine ganze Zahl ≥ 0 und ≤ 1000, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²³, R²⁵, R²⁷, R²⁹ unabhängig voneinander jeweils aus der Gruppe bestehend aus Wasserstoff, Alkylgruppe mit 1 bis 8 Kohlenstoffatomen ausgewählt sind,
und wobei R²² eine Alkylgruppe mit 1 bis 8 Kohlenstoffatomen ist,
und wobei die Reste R¹¹, R¹³, R¹⁵, R¹⁷ unabhängig voneinander jeweils auch eine Gruppe der allgemeinen Struktur **(III)** mit 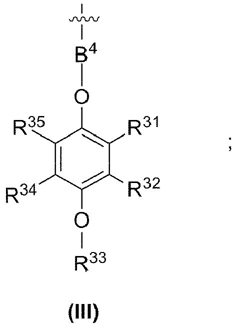 wobei die Reste R³¹, R³², R³⁴, R³⁵ unabhängig voneinander jeweils aus der Gruppe bestehend aus Wasserstoff, Alkylgruppe mit 1 bis 8 Kohlenstoffatomen ausgewählt sind, und wobei R³³ eine Alkylgruppe mit 1 bis 8 Kohlenstoffatomen ist, sein können,
und wobei R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 8 Kohlenstoffatomen ist,
ausgewählt sein können,
wobei B¹, B², B³, B⁴ unabhängig voneinander aus der Gruppe bestehend aus
direkte Bindung,

&-(O)ₚ₁-[C=O]ₚ₂-(O)ₚ₃-B⁵-&&,

ausgewählt sind,
wobei p1, p2, p3 jeweils 0 oder 1 mit der Maßgabe, dass nicht gleichzeitig p1 = p3 = 1 und p2 = 0 ist, sind,
B⁵ = Alkylengruppe mit 1 bis 30 Kohlenstoffatomen ist, noch bevorzugter ist p1 = p2 = p3 = 0 und B⁵ = Alkylengruppe mit 1 bis 10 Kohlenstoffatomen,
und wobei "&&" für B¹ die zu A⁵ = Sauerstoff weisende Bindung bezeichnet, für B² die zu A⁶ = Sauerstoff weisende Bindung bezeichnet, für B³ die zu A⁷ = Sauerstoff weisende Bindung bezeichnet, für B⁴ die zu A¹³ = Sauerstoff weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft, für B⁴ die Bindung bezeichnet, welche B⁴ mit der Doppelbindung verknüpft.

Das erfindungsgemäße Polymer gemäß Punkt 4 kann dabei insbesondere n¹ miteinander verknüpfte Wiederholungseinheiten der chemischen Struktur **(I)** mit den für die bevorzugtere Ausführungsform angegebenen Bedeutungen von R¹, R², R³, R⁴, R⁶, R⁹, R¹¹, R¹³, R¹⁵, R¹⁷, B¹, B², m¹, m² umfassen.
Das erfindungsgemäße Polymer gemäß Punkt 4 kann dabei alternativ insbesondere n² miteinander verknüpfte Wiederholungseinheiten der chemischen Struktur **(II)** mit den für die bevorzugtere Ausführungsform angegebenen Bedeutungen von R¹⁹, R²⁰, R²¹, R²², R²³, R²⁵, R²⁷, R²⁹, B³, m³ umfassen.

Noch bevorzugter sind im erfindungsgemäßen Polymer nach Punkt 4 R¹ = R³, R² = R⁴, R¹⁹ = R²¹, R²⁰ = R²³, R³¹ = R³⁴, R³² = R³⁵, und B¹, B², B³, B⁴ unabhängig voneinander jeweils aus der Gruppe bestehend aus direkte Bindung, Methylen, Ethylen, n-Propylen ist, ausgewählt, wobei "&&" und "&" die oben angegebenen Bedeutungen haben, wobei insbesondere R⁶, R⁹, R¹¹, R¹³, R¹⁵, R¹⁷, R²⁵, R²⁷, R²⁹, R³⁰ unabhängig voneinander Alkyl mit 1 bis 6 Kohlenstoffatomen oder H, bevorzugt R⁶, R⁹, R¹¹, R¹³, R¹⁵, R¹⁷, R²⁵, R²⁷, R²⁹, R³⁰ jeweils H sind.

Noch mehr bevorzugter sind R¹ = R³ = H, R² = R⁴= Alkylgruppe mit 1 bis 8, insbesondere 1 bis 6, Kohlenstoffatomen, R¹⁹ = R²¹= H, R²⁰ = R²³ = Alkylgruppe mit 1 bis 8, insbesondere 1 bis 6, Kohlenstoffatomen, R³¹ = R³⁴ = H, R³² = R³⁵ = Alkylgruppe mit 1 bis 8, insbesondere 1 bis 6, Kohlenstoffatomen, und B¹, B², B³, B⁴ sind unabhängig voneinander jeweils aus der Gruppe bestehend aus direkte Bindung, Methylen, Ethylen, n-Propylen, ausgewählt, wobei "&&" und "&" die oben angegebenen Bedeutungen haben, wobei insbesondere R⁶, R⁹, R¹¹, R¹³, R¹⁵, R¹⁷, R²⁵, R²⁷, R²⁹, R³⁰ unabhängig voneinander Alkyl mit 1 bis 6 Kohlenstoffatomen oder H, bevorzugt R⁶, R⁹, R¹¹, R¹³, R¹⁵, R¹⁷, R²⁵, R²⁷, R²⁹, R³⁰ jeweils H sind.

Am bevorzugtesten ist das erfindungsgemäße Polymer eines der chemischen Struktur **(I)** gemäß Punkt 4, wobei R¹ = R³ = H, R² = R⁴= *tert*-Butyl, B¹ = B² = Methylen, R⁶, R⁹, R¹¹, R¹³, R¹⁵, R¹⁷ jeweils H.

Die erfindungsgemäßen Polymere haben im Gegensatz zu den von Nesvadba *et al.* und Weng et *al.* beschriebenen ein Doppelbindungen aufweisendes Rückgrat. Es wurde überraschend festgestellt, dass die erfindungsgemäßen Polymere zum Einsatz in Batterien geeignet sind, die zu einer höheren Kapazität der entsprechenden Batterie führt, dies auch nach Durchlaufen weiterer Lade/-Entladezyklen.

Das erfindungsgemäße Polymer umfasst n¹ miteinander verknüpfte Wiederholungseinheiten der chemischen Struktur **(I)** oder n² miteinander verknüpfte Wiederholungseinheiten der chemischen Struktur **(II).**

Dabei sind n¹ und n² unabhängig voneinander jeweils eine ganze Zahl ≥ 4, insbesondere eine ganze Zahl ≥ 4 und ≤ 5000, bevorzugt eine ganze Zahl ≥ 10 und ≤ 1000.
m¹, m², m³ sind unabhängig voneinander eine ganze Zahl ≥ 0, insbesondere ≥ 0 und ≤ 5000, bevorzugt ≥ 0 und ≥ 1000.
Dabei beträgt die durchschnittliche Molmasse (bestimmt mittels Größenausschlusschromatographie mit Polystyrolstandard; DIN 55672-2:2015-02) insbesondere 700 bis 2000000 g/mol, bevorzugt 1000 bis 1000000 g/mol, bevorzugter 3000 bis 300000 g/mol.

Die Wiederholungseinheiten der chemischen Struktur **(I)** sind innerhalb des Polymers gleich oder zumindest teilweise voneinander verschieden. Die Wiederholungseinheiten der chemischen Struktur **(II)** sind innerhalb des Polymers gleich oder zumindest teilweise voneinander verschieden. "Zumindest teilweise voneinander verschieden" bedeutet, dass sich mindestens zwei Wiederholungseinheiten voneinander unterscheiden.
Das heißt insbesondere im Falle der chemischen Struktur **(I),** dass sich mindestens zwei der n¹ miteinander verknüpften Wiederholungseinheiten in mindestens einem der Reste A¹ bis A⁶, R¹, R², R³, R⁴, R⁶, R⁹, R¹¹, R¹³, R¹⁵, R¹⁷, B¹, B² in dem Wert von m¹, m², der Position von A², A³, A⁶ am zentralen Phenylring, und/ oder der Position R⁶ zu B¹, R⁹ zu B², R¹¹ zu R¹³, R¹⁵ zu R¹⁷ an der jeweiligen Doppelbindung unterscheiden. Bevorzugt heißt das im Falle der chemischen Struktur (I), dass sich mindestens zwei der n¹ miteinander verknüpften Wiederholungseinheiten in mindestens einem der Reste A¹ bis A⁶, R¹, R², R³, R⁴, R⁶, R⁹, R¹¹, R¹³, R¹⁵, R¹⁷, B¹, B² in dem Wert von m¹, m², und/oder der Position von A², A³, A⁶ am zentralen Phenylring unterscheiden.
Das heißt insbesondere im Falle der chemischen Struktur **(II),** dass sich mindestens zwei der n² miteinander verknüpften Wiederholungseinheiten in mindestens einem der Reste A⁷ bis A¹², R¹⁹, R²⁰, R²¹, R²², R²³, R²⁵, R²⁷, R²⁹, B³ in dem Wert von m³ und/ oder der Position R²⁵ zu B³, R²⁷ zu B²⁹ an der jeweiligen Doppelbindung unterscheiden. Bevorzugt heißt das im Falle der chemischen Struktur **(II),** dass sich mindestens zwei der n² miteinander verknüpften Wiederholungseinheiten in mindestens einem der Reste A⁷ bis A¹², R¹⁹, R²⁰, R²¹, R²², R²³, R²⁵, R²⁷, R²⁹, B³ und/oder in dem Wert von m³ unterscheiden.
Dabei sind die Wiederholungseinheiten der chemischen Struktur **(I)** innerhalb des Polymers so miteinander verknüpft, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist.
Dabei sind die Wiederholungseinheiten der chemischen Struktur **(II)** innerhalb des Polymers so miteinander verknüpft, dass die durch "*" gekennzeichnete Bindung einer bestimmten Wiederholungseinheit mit der durch "**" gekennzeichneten Bindung der benachbarten Wiederholungseinheit verknüpft ist.
In dieser Erfindung sind in den Strukturen **(I)** und **(II)** mehrere Reste dargestellt, die über eine geschlängelte Bindung mit einem ersten sp²-hybridisierten Kohlenstoffatom verknüpft sind, wobei dieses erste Kohlenstoffatom mit einem zweiten sp²-Kohlenstoffatom über eine Doppelbindung verbunden ist. Dies bedeutet, dass der betreffende Rest sowohl *cis* oder *trans* zu den Resten, welche mit dem zweiten Kohlenstoffatom verknüpft sind, stehen kann. R⁶ kann demnach *cis* oder *tr*ans zu B¹ stehen, R⁹ kann demnach *cis* oder *tr*ans zu B² stehen, R¹¹ kann demnach *cis* oder *tr*ans zu R¹³ stehen, R¹⁵ kann demnach *cis* oder *tr*ans zu R¹⁷ stehen, R²⁵ kann demnach *cis* oder *tr*ans zu B³ stehen, R²⁷ kann demnach *cis* oder *tr*ans zu R²⁹ stehen.

Die Endgruppen der ersten Wiederholungseinheit des erfindungsgemäßen Polymers, welche sich für diese in der chemischen Struktur **(I)** an den durch "#" und "§" definierten Bindungen befindet, sowie die Endgruppen der n¹-ten Wiederholungseinheit des erfindungsgemäßen Polymers, welche sich für diese in der chemischen Struktur **(I)** an den durch "#" und "# #" definierten Bindungen befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Die Endgruppen der ersten Wiederholungseinheit des erfindungsgemäßen Polymers, welche sich für diese in der chemischen Struktur **(II)** an der durch "*" definierten Bindung befindet, sowie die Endgruppen der n²-ten Wiederholungseinheit des erfindungsgemäßen Polymers, welche sich für diese in der chemischen Struktur **(II)** an der durch "**" definierten Bindung befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Im Falle von B¹ bezeichnet "&&" die zu A⁵ weisende Bindung. Dies ist die chemische Bindung, die B¹ mit A⁵ verknüpft. Im Falle von B¹ bezeichnet "&" die Bindung, welche B¹ mit der Doppelbindung verknüpft. Dies ist die andere in der chemischen Struktur **(I)** von B¹ wegführende chemische Bindung, also die chemische Bindung, die B¹ mit der Doppelbindung, an welcher auch R⁶ hängt, verknüpft.

Im Falle von B² bezeichnet "&&" die zu A⁶ weisende Bindung. Dies ist die chemische Bindung, die B² mit A⁶ verknüpft. Im Falle von B² bezeichnet "&" die Bindung, welche B² mit der Doppelbindung verknüpft. Dies ist die andere in der chemischen Struktur **(I)** von B² wegführende chemische Bindung, also die chemische Bindung, die B² mit der Doppelbindung, an welcher auch R⁹ hängt, verknüpft.

Im Falle von B³ bezeichnet "&&" die zu A⁷ weisende Bindung. Dies ist die chemische Bindung, die B³ mit A⁷ verknüpft. Im Falle von B³ bezeichnet "&" die Bindung, welche B³ mit der Doppelbindung verknüpft. Dies ist die andere in der chemischen Struktur **(II)** von B³ wegführende chemische Bindung, also die chemische Bindung, die B³ mit der Doppelbindung, an welcher auch R²⁵ hängt, verknüpft.

Im Falle von B⁴ bezeichnet "&&" die zu A¹³ weisende Bindung. Dies ist die chemische Bindung, die B⁴ mit A¹³ verknüpft. Im Falle von B⁴ bezeichnet "&" die die Bindung, welche B⁴ mit der Doppelbindung verknüpft. Dies ist die andere in der chemischen Struktur **(III)** von B⁴ wegführende chemische Bindung, also die chemische Bindung, die, wenn die chemische Struktur **(III)** R¹¹ ist, B⁴ mit der Doppelbindung, an welcher auch R¹³ hängt, verknüpft bzw. die, wenn die chemische Struktur **(III)** R¹⁵ ist, B⁴ mit der Doppelbindung, an welcher auch R¹⁷ hängt, verknüpft bzw. die, wenn die chemische Struktur **(III)** R¹³ ist, B⁴ mit der Doppelbindung, an welcher auch R¹¹ hängt, verknüpft bzw. die, wenn die chemische Struktur **(III)** R¹⁷ ist, B⁴ mit der Doppelbindung, an welcher auch R¹⁵ hängt, verknüpft.

Ein aliphatischer Rest ist im Sinne der Erfindung eine acyclische oder cyclische, gesättigte oder ungesättigte, unverzweigte oder verzweigte Kohlenwasserstoffgruppe, die nicht aromatisch ist.

Ein aliphatischer Rest kann einwertig sein, das heißt nur über eines seiner Kohlenstoffatome mit dem restlichen Molekül verbunden sein. Ein einwertiger Kohlenwasserstoffrest ist insbesondere eine Kohlenwasserstoffgruppe ausgewählt aus Alkylgruppe, Alkenylgruppe, Alkinylgruppe, oder gesättigter oder ungesättigter Cycloalkylgruppe. Eine ungesättigte Cycloalkylgruppe nennt man bei Vorliegen einer Doppelbindung "Cycloalkenylgruppe", bei Vorliegen einer Dreifachbindung "Cycloalkinylgruppe".

Ein aliphatischer Rest kann alternativ zweiwertig sein, das heißt über zwei seiner Kohlenstoffatome mit dem restlichen Molekül verbunden sein. Ein zweiwertiger Kohlenwasserstoffrest ist insbesondere eine Kohlenwasserstoffgruppe ausgewählt aus Alkylengruppe, Alkenylengruppe, Alkinylengruppe, oder gesättigter oder ungesättigter Cycloalkylengruppe. Eine ungesättigte Cycloalkylengruppe nennt man bei Vorliegen einer Doppelbindung "Cycloalkenylengruppe", bei Vorliegen einer Dreifachbindung "Cycloalkinylengruppe".
Wenn in dieser Erfindung nicht explizit als zweiwertig bezeichnet, sind unter der Bezeichnung "aliphatischer Rest" im Sinne der Erfindung einwertige aliphatische Reste zu verstehen.

Im Sinne der Erfindung ist eine "Alkylgruppe" unverzweigt oder verzweigt und ein einwertiger gesättigter Kohlenwasserstoffrest, der die allgemeine chemische Struktur **(a)** mit 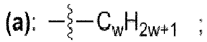 aufweist.

Die Kette an Kohlenstoffatomen "-C_{w}H_{2w+1}" kann dabei linear sein, dann handelt es sich um eine unverzweigte Alkylgruppe. Sie kann aber auch Verzweigungen aufweisen, dann handelt es sich um eine verzweigte Alkylgruppe.

Dabei ist w in der chemischen Struktur **(a)** eine ganze Zahl, insbesondere aus dem Bereich 1 bis 30, bevorzugt aus dem Bereich 1 bis 18, bevorzugter aus dem Bereich 1 bis 12, noch bevorzugter aus dem Bereich 1 bis 10, noch mehr bevorzugter aus dem Bereich 1 bis 8, am bevorzugtesten aus dem Bereich 1 bis 6. w ist bei einer unverzweigten oder verzweigten Alkylgruppe mit 1 bis 30 Kohlenstoffatomen ausgewählt aus dem Bereich 1 bis 30. w ist bei einer unverzweigten oder verzweigten Alkylgruppe mit 1 bis 18 Kohlenstoffatomen ausgewählt aus dem Bereich 1 bis 18. w ist bei einer unverzweigten oder verzweigten Alkylgruppe mit 1 bis 12 Kohlenstoffatomen ausgewählt aus dem Bereich 1 bis 12. w ist bei einer unverzweigten oder verzweigten Alkylgruppe mit 1 bis 10 Kohlenstoffatomen ausgewählt aus dem Bereich 1 bis 10. w ist bei einer unverzweigten oder verzweigten Alkylgruppe mit 1 bis 8 Kohlenstoffatomen ausgewählt aus dem Bereich 1 bis 8. w ist bei einer unverzweigten oder verzweigten Alkylgruppe mit 1 bis 6 Kohlenstoffatomen ausgewählt aus dem Bereich 1 bis 6.

Im Sinne der Erfindung ist eine "unverzweigte oder verzweigte Alkylgruppe mit 1 bis 30 Kohlenstoffatomen" insbesondere ausgewählt aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl*, n*-Octadecyl, *n*-Nonadecyl, *n*-Eicosyl, *n*-Heneicosyl, *n*- Docosyl, *n*-Tricosyl, *n*-Tetracosyl, *n*-Pentacosyl, *n*-Hexacosyl, *n*-Heptacosyl, *n*-Octocosyl, *n*-Nonacosyl, *n*-Tricontyl.

Im Sinne der Erfindung ist eine "unverzweigte oder verzweigte Alkylgruppe mit 1 bis 18 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl.

Im Sinne der Erfindung ist eine "unverzweigte oder verzweigte Alkylgruppe mit 1 bis 12 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl.

Im Sinne der Erfindung ist eine "unverzweigte oder verzweigte Alkylgruppe mit 1 bis 10 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n-*Octyl, *n*-Nonyl, *n*-Decyl.

Im Sinne der Erfindung ist eine "unverzweigte oder verzweigte Alkylgruppe mit 1 bis 8 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl.

Im Sinne der Erfindung ist eine "unverzweigte oder verzweigte Alkylgruppe mit 1 bis 6 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Eine Alkylgruppe mit 1 bis 30 Kohlenstoffatomen ist erfindungsgemäß insbesondere eine Alkylgruppe mit 1 bis 18, bevorzugt 1 bis 12, bevorzugter 1 bis 10, noch bevorzugter 1 bis 8, am bevorzugtesten 1 bis 6 Kohlenstoffatomen.

Eine Alkylgruppe mit 1 bis 6 Kohlenstoffatomen ist erfindungsgemäß insbesondere eine Alkylgruppe mit 1 bis 4 Kohlenstoffatomen und noch bevorzugter ausgewählt aus Methyl, Ethyl, *n-*Propyl, *iso*-Propyl, *n*-Butyl, *sec*-Butyl, *tert*-Butyl.

Im Sinne der Erfindung ist eine "Alkenylgruppe" unverzweigt oder verzweigt und ergibt sich aus einer Alkylgruppe durch Substitution mindestens einer CH-CH-Einfachbindung in der Alkylgruppe durch eine C=C-Doppelbindung.

Im Sinne der Erfindung ist eine "Alkinylgruppe" unverzweigt oder verzweigt und ergibt sich aus einer Alkylgruppe durch Substitution mindestens einer CH₂-CH₂-Einfachbindung in der Alkylgruppe durch eine C=C-Dreifachbindung oder aus einer Alkenylgruppe durch Substitution mindestens einer CH=CH-Doppelbindung in der Alkenylgruppe durch eine C=C-Dreifachbindung.

Eine gesättigte Cycloalkylgruppe ist ein Alkylrest, in dem mindestens 3 Kohlenstoffatome innerhalb eines gesättigten Ringes vorliegen, und kann daneben auch noch weitere nicht im Ring vorliegende Kohlenstoffatome umfassen. Sie kann über eines dieser Ring-Kohlenstoffatome oder über Kohlenstoffatome, die nicht innerhalb des Ringes vorliegen, mit dem restlichen Molekül verknüpft sein. Im Sinne der Erfindung ist eine Cycloalkylgruppe insbesondere ausgewählt aus Cyclopropyl, Cyclobutyl, Cyclopropylmethyl, Cyclopentyl, Cyclobutylmethyl, Cyclohexyl, Cycloheptyl, Cyclooctyl, Cyclononyl, Cyclodecyl, Cycloundecyl, Cyclododecyl, Cyclotridecyl, Cyclotetradecyl, Cyclopentadecyl.

Eine ungesättigte Cycloalkylgruppe ergibt sich aus einer gesättigten Cycloalkylgruppe durch Substitution mindestens einer CH-CH-Einfachbindung in der gesättigten Cycloalkylgruppe durch mindestens eine C=C-Doppelbindung (zur Cycloalkenylgruppe) und/oder einer CH₂-CH₂-Einfachbindung durch eine C=C-Dreifachbindung (zur Cycloalkinylgruppe).

Eine Alkylengruppen hat im Sinne der Erfindung insbesondere 1 bis 30, bevorzugt 1 bis 12, noch bevorzugter 1 bis 6 Kohlenstoffatome und kann im Sinne der Erfindung verzweigt oder unverzweigt sein. "Alkylengruppe" bezeichnet im Sinne der Erfindung einen zweiwertigen gesättigten Kohlenwasserstoffrest, welcher durch die allgemeine chemische Struktur **(b)** mit 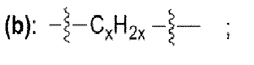 beschrieben werden kann. Die Kette an Kohlenstoffatomen"-CₓH₂ₓ" kann dabei linear sein, dann handelt es sich um eine unverzweigte Alkylengruppe. Sie kann aber auch Verzweigungen aufweisen, dann handelt es sich um eine verzweigte Alkylengruppe. Dabei ist x in der chemischen Struktur **(b)** eine ganze Zahl.

x ist bei einer unverzweigten oder verzweigten Alkylengruppe mit 1 bis 30 Kohlenstoffatomen ausgewählt aus dem Bereich 1 bis 30.

x ist bei einer unverzweigten oder verzweigten Alkylengruppe mit 1 bis 12 Kohlenstoffatomen ausgewählt aus dem Bereich 1 bis 12.

x ist bei einer unverzweigten oder verzweigten Alkylengruppe mit 1 bis 6 Kohlenstoffatomen ausgewählt aus dem Bereich 1 bis 6.

Eine Alkylengruppe weist erfindungsgemäß insbesondere 1 bis 6 Kohlenstoffatome auf, bevorzugt 1 bis 4 Kohlenstoffatome auf und ist noch bevorzugter ausgewählt aus Methylen, Ethylen, n-Propylen, n-Butylen.

Im Sinne der Erfindung ist eine "Alkenylengruppe" unverzweigt oder verzweigt und ergibt sich aus einer Alkylengruppe durch Substitution mindestens einer CH-CH-Einfachbindung in der Alkylengruppe durch eine C=C-Doppelbindung.

Im Sinne der Erfindung ist eine "Alkinylengruppe" unverzweigt oder verzweigt und ergibt sich aus einer Alkylgruppe durch Substitution mindestens einer CH₂-CH₂-Einfachbindung in der Alkylengruppe durch eine C=C-Dreifachbindung oder aus einer Alkenylengruppe durch Substitution mindestens einer CH=CH-Doppelbindung in der Alkenylengruppe durch eine C=C-Dreifachbindung.

Im Sinne der Erfindung ist eine gesättigter Cycloalkylengruppe eine zweiwertige gesättigte Kohlenwasserstoffgruppe mit mindestens 3, insbesondere 3 bis 30 Kohlenstoffatomen, welche mindestens einen gesättigten Ring aus 3 bis 30 Kohlenstoffatomen aufweist, bevorzugt eine chemische Struktur **(c)** mit 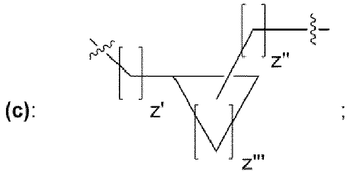 wobei z' insbesondere eine ganze Zahl zwischen 0 und 27 ist; wobei z" insbesondere eine ganze Zahl zwischen 0 und 27 ist; wobei z'" insbesondere eine ganze Zahl zwischen 1 und 28 ist; und wobei gleichzeitig gilt, dass z' + z" + z'" ≤ 28.

Im Sinne der Erfindung ergibt sich eine ungesättigte Cycloalkylengruppe aus einer gesättigten Cycloalkylengruppe durch Substitution mindestens einer CH-CH-Einfachbindung in der Cycloalkylengruppe durch eine C=C-Doppelbindung (zur Cycloalkenylengruppe) und/oder durch Substitution mindestens einer CH₂-CH₂-Einfachbindung in der Cycloalkylengruppe durch eine C=C-Dreifachbindung (zur Cycloalkinylengruppe).

Ein (hetero)aromatischer Rest ist im Sinne der Erfindung ein heteroaromatischer oder ein aromatischer Rest. Ein (hetero)aromatischer Rest kann einwertig sein, das heißt nur über eines seiner Kohlenstoffatome (im Falle eines aromatischen Rests) bzw. über eines seiner Kohlenstoff- oder Heteroatome (im Falle eines heteroaromatischen Restes) mit dem restlichen Molekül verbunden sein.

Ein (hetero)aromatischer Rest kann alternativ zweiwertig sein, das heißt über zwei seiner Kohlenstoffatome mit dem restlichen Molekül verbunden sein (im Falle eines aromatischen Rests) bzw. über zwei seiner Kohlenstoffatome, zwei seiner Heteroatome oder eines seiner Kohlenstoffatome und eines seiner Heteroatome (im Falle eines heteroaromatischen Restes) mit dem restlichen Molekül verbunden sein.
Wenn in dieser Erfindung nicht explizit als zweiwertig bezeichnet, sind unter der Bezeichnung "(hetero)aromatischer Rest" im Sinne der Erfindung einwertige (hetero)aromatische Reste zu verstehen.

Ein aromatischer Rest weist ausschließlich Kohlenstoffatome und mindestens einen aromatischen Ring auf. Ein aromatischer Rest ist insbesondere ausgewählt Arylrest, Aralkylrest, Alkarylrest. Arylreste weisen ausschließlich aromatische Ringe auf und sind über ein Kohlenstoffatom des aromatischen Ringes mit dem Molekül verknüpft. Bevorzugt ist ein Arylrest Phenyl.
Alkarylreste weisen mindestens einen aromatischen Ring auf, über welchen sie mit dem restlichen Molekül verknüpft sind und tragen daneben auch Alkylreste am aromatischen Ring. Bevorzugt ist ein Alkarylrest Tolyl.
Aralkylreste gehen formal durch Substitution eines Wasserstoffrestes einer Alkylgruppe mit einer Arylgruppe oder einer Alkarylgruppe hervor. Bevorzugt ist ein Aralkylrest Benzyl, Phenylethyl, α-Methylbenzyl.

Ein heteroaromatischer Rest ist insbesondere ausgewählt Hetero-Arylrest, Hetero-Aralkylrest, Alkylheteroarylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes, oder, im Falle eines Hetero-Aralkylrests oder eines Alkylheteroarylrestes, alternativ oder zusätzlich außerhalb des aromatischen Ringes aufweist.

Bevorzugte (hetero)aromatische Reste sind ausgewählt aus der Gruppe bestehend aus einem Ring der vorstehend definierten chemischen Struktur **(III),** Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol, 9-Anthryl, 9-Phenanthryl.

Ein zweiwertiger (hetero)aromatischer Rest ist im Sinne der Erfindung ein zweiwertiger aromatischer Rest oder ein zweiwertiger heteroaromatischer Rest.
Ein zweiwertiger aromatischer Rest ist erfindungsgemäß eine zweiwertige Kohlenwasserstoffgruppe mit mindestens 6, bevorzugt 6 bis 30, Kohlenstoffatomen, von denen mindestens 6 Kohlenstoffatome in einem aromatischen System vorliegen und die übrigen Kohlenstoffatome, falls vorhanden, gesättigt sind. Der zweiwertige aromatische Rest kann über Kohlenstoffatome des aromatischen Systems oder, falls vorhanden, gesättigte Kohlenstoffatome mit dem restlichen Molekül verknüpft sein.

Bevorzugt ist ein zweiwertiger aromatischer Rest eine chemische Struktur (d) mit 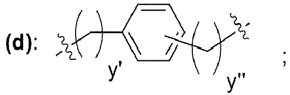 wobei y' eine ganze Zahl > 0, bevorzugt zwischen 0 und 24 ist; wobei y" eine ganze Zahl > 0, bevorzugt zwischen 0 und 24 ist; und wobei bevorzugt gleichzeitig gilt, dass y' + y" ≤ 24.

Ein zweiwertiger heteroaromatischer Rest ist ein zweiwertiger aromatischer Rest, der zusätzlich mindestens ein Heteroatom, insbesondere mindestens ein Heteroatom ausgewählt aus der Gruppe bestehend aus Stickstoff, Sauerstoff, Schwefel innerhalb oder außerhalb des aromatischen Ringes, bevorzugt innerhalb des aromatischen Ringes, aufweist, aber insbesondere über Kohlenstoffatome mit dem restlichen Molekül verknüpft ist.

"Gegebenenfalls mit mindestens einer Gruppe ausgewählt aus Nitrogruppe, -NH₂, CN, SH, OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest" bedeutet, dass mindestens ein an Kohlenstoffatom gebundenes Wasserstoffatom im aliphatischen Rest durch eine Gruppe ausgewählt aus Nitrogruppe, -NH₂, -CN, -SH, -OH, Halogen ersetzt sein kann (aber nicht muss) und/oder dass in dem aliphatischen Rest mindestens eine mit zwei sp³-hybridisierten Kohlenstoffatomen, bevorzugt mit zwei -CH₂-Gruppen, noch bevorzugter mit zwei -CH₂CH₂-Gruppen, verknüpfte CH₂-Gruppe durch ein Sauerstoffatom (dann liegt eine Ethergruppe vor), ein Schwefelatom (dann liegt eine Thioethergruppe vor), eine NH oder N-Alkylgruppe (dann liegt eine Aminoethergruppe vor), eine -C(=O)-Gruppe (dann liegt eine Carbonylgruppe vor), eine -C(=O)-O-Gruppe (dann liegt eine Carbonsäureestergruppe vor), eine -C(=O)-NH- oder -C(=O)-N(Alkyl)-Gruppe (dann liegt eine Carbonsäureamidgruppe vor), eine -SO₂-O-Gruppe (dann liegt ein Sulfonnsäureester vor), eine -OPO₂-O-Gruppe (dann liegt ein Phosphorsäureester vor) substituiert sein kann (aber nicht muss).

"Zweiwertiger, gegebenenfalls mit mindestens einer Gruppe ausgewählt aus Nitrogruppe, -NH₂, CN, SH, OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest" bedeutet, dass mindestens ein an Kohlenstoffatom gebundenes Wasserstoffatom im zweiwertigen aliphatischen Rest durch eine Gruppe ausgewählt aus Nitrogruppe, -NH₂, -CN, -SH, -OH, Halogen ersetzt sein kann (aber nicht muss) und/oder dass in dem aliphatischen Rest mindestens eine mit zwei sp³-hybridisierten Kohlenstoffatomen, bevorzugt mit zwei -CH₂-Gruppen, noch bevorzugter mit zwei -CH₂CH₂-Gruppen, verknüpfte -CH₂-Gruppe durch ein Sauerstoffatom (dann liegt eine Ethergruppe vor), ein Schwefelatom (dann liegt eine Thioethergruppe vor), eine NH oder N-Alkylgruppe (dann liegt eine Aminoethergruppe vor), eine - C(=O)-Gruppe (dann liegt eine Carbonylgruppe vor), eine -C(=O)-O-Gruppe (dann liegt eine Carbonsäureestergruppe vor), eine -C(=O)-NH- oder -C(=O)-N(Alkyl)-Gruppe (dann liegt eine Carbonsäureamidgruppe vor), eine -SO₂-O-Gruppe (dann liegt ein Sulfonnsäureester vor), eine -OPO₂-O-Gruppe (dann liegt ein Phosphorsäureester vor) substituiert sein kann (aber nicht muss).

Die erfindungsgemäßen Polymere können auf einfache und aufwandgeringe Weise sowie aus gut zugänglichen Startmaterialien hergestellt werden. Abhängig von der verwendeten Polymerisationsart können die Monomere teilweise aus kommerziell zu einem sehr geringen Preis erhältlichen Ausgangsstoffen in nur einer Synthesestufe ohne chromatographische Trennverfahren hergestellt werden, was einen deutliche Fortschritt gegenüber den in der Fachliteratur bekannten Herstellungsmethoden bietet. Zur Polymerisation ist kein weiteres Monomer nötig und als Herstellungsmethode können dem Fachmann geläufige Polymerisationsverfahren verwendet werden. Dabei können Polymere mit hoher Molmasse in sehr hohen Ausbeuten erhalten werden. Durch die Einführung von polymerisierbaren Gruppen mit geringer Molmasse kann die Monomermolmasse niedrig gehalten und die theoretische Kapazität (die umgekehrt proportional zur Molmasse ist) des sekundären elektrischen Ladungsspeichers maximiert werden. Ferner stehen in diesen Polymeren die redoxaktiven Gruppen nicht in Konjugation miteinander; als Konsequenz weist der elektrische Ladungsspeicher ein flaches Lade-/Entladeplateau auf. Diese Materialien unterscheiden sich vom Stand der Technik durch eine sehr einfache Synthese aus kommerziell zu einem sehr geringen Preis erhältlichen Ausgangsstoffen in teilweise nur einer Synthesestufe ohne chromatographische Trennverfahren. Weiterhin ermöglicht das hohe Redoxpotential der Polymere gemäß der Erfindung höhere Zellspannungen und spezifische Energien als in den bekannten Systemen.

Die Polymere gemäß dieser Erfindung können sowohl Homopolymere als auch Copolymere sein. Homopolymere sind Polymere, die nur aus einem Monomer synthetisiert wurden. Copolymere sind Polymere, die aus zwei oder mehreren Monomeren synthetisiert wurden. Werden zwei oder mehrere Monomere bei der Synthese verwendet, so können die Monomere der Wiederholeinheiten der Polymere gemäß dieser Erfindung sowohl in statistischer Verteilung, als Blöcke oder alternierend im Polymer vorliegen. Die Polymere gemäß dieser Erfindung können sowohl in linearer Form [wie in Struktur **(II)]** als auch als quervernetzt [wie in Struktur **(I)]** vorliegen.

Die erfindungsgemäßen Polymere können durch dem Fachmann bekannte Polymerisation, zum Beispiel nach der bekannten Polymerisation zur Herstellung von Polyacetylenen, welche bevorzugt unter Metallkatalyse abläuft, einer Verbindung der folgenden Struktur **(I)'** oder **(II)',** optional auch mit einer Verbindung der folgenden Struktur **(III)',** synthetisiert werden. In den Strukturen **(I)'** oder **(II)'** im folgenden Schema haben die Reste R¹' bis R⁴', R⁶', R⁹', R¹¹', R¹³', R¹⁹' bis R²³', R²⁵', B¹' bis B³', A¹' bis A¹²', jeweils die vorstehend für R¹ bis R⁴, R⁶, R⁹, R¹¹, R¹³, R¹⁹ bis R²³, R²⁵ B¹ bis B³, und A¹ bis A¹² angegebenen Bedeutungen.

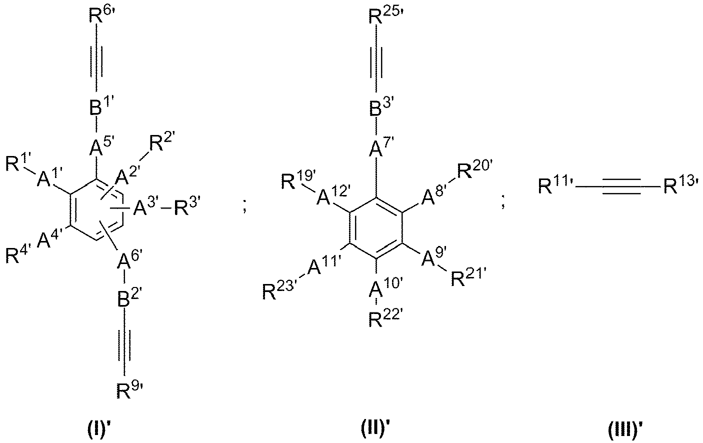

Ein Polymer der Struktur **(I)** kann dabei durch eine Polymerisation, in der ausschließlich Monomere der Struktur **(I)'** eingesetzt werden, erhalten werden, so dass das erhaltene Polymer der Struktur **(I)** ein Homopolymer darstellt, in welchem m¹ = m² = 0.

Ein Polymer der Struktur **(I)** kann dabei durch eine Polymerisation, in der Monomere der Struktur **(I)'** und **(II)'** eingesetzt werden, erhalten werden, so dass das erhaltene Polymer der Struktur **(I)** ein Copolymer darstellt, in welchem m¹, m² ≥ 0 und der Rest R¹¹, R¹³, R¹⁵ oder R¹⁷ in der obigen Struktur **(I)** unabhängig voneinander jeweils eine Gruppe der vorgenannten allgemeinen Struktur **(III)** ist.

Ein Polymer der Struktur **(I)** kann dabei durch eine Polymerisation, in der Monomere der Struktur **(I)'** und (**III**)' eingesetzt werden, erhalten werden, so dass das erhaltene Polymer der Struktur **(I)** ein Copolymer darstellt, in welchem m¹, m² ≥ 0 und die Reste R¹¹, R¹³, R¹⁵, R¹⁷ in der obigen Struktur **(I)** keine Gruppe der allgemeinen Struktur **(III)** sein können.

Ein Polymer der Struktur **(I)** kann dabei durch eine Polymerisation, in der Monomere der Struktur **(I)', (II)'** und (**III**)' eingesetzt werden, erhalten werden, so dass das erhaltene Polymer der Struktur **(I)** ein Copolymer darstellt, in welchem m¹, m² ≥ 0 und die Reste R¹¹, R¹³, R¹⁵, R¹⁷ in der obigen Struktur **(I)** unabhängig voneinander jeweils auch eine Gruppe der vorgenannten allgemeinen Struktur **(III)** sein können.

Ein Polymer der Struktur **(II)** kann dabei durch eine Polymerisation, in der ausschließlich Monomere der Struktur **(II)'** eingesetzt werden, erhalten werden, so dass das erhaltene Polymer der Struktur **(II)** ein Homopolymer darstellt, in welchem m³= 0.

Ein Polymer der Struktur **(II)** kann dabei durch eine metallkatalysierte Polymerisation, in der Monomere der Struktur **(II)'** und (**III**)' eingesetzt werden, erhalten werden, so dass das erhaltene Polymer der Struktur **(II)** ein Copolymer darstellt, in welchem m³ ≥ 0.

Die Verbindungen der Strukturen **(I)'** und **(II)'** sind dem Fachmann über bekannte Verfahren zugänglich, z.B. über Umsetzung eines Dihydroxybenzols oder Dibrombenzols mit Propargylbromid bzw. Acetylen, wie im folgenden Schema (Syntheseschema 1) skizziert. Die Beispiele sind anhand der oben genannten Struktur **(I)'** gezeigt, aber entsprechend für die Synthese einer Verbindung der oben genannten Struktur **(II)'.** R^{A}, R^{B}, R^{C}, R^{D} entsprechen A¹'-R¹', A²'-R²', A³'-R³', A⁴'-R⁴' aus der Struktur **(I)'.**

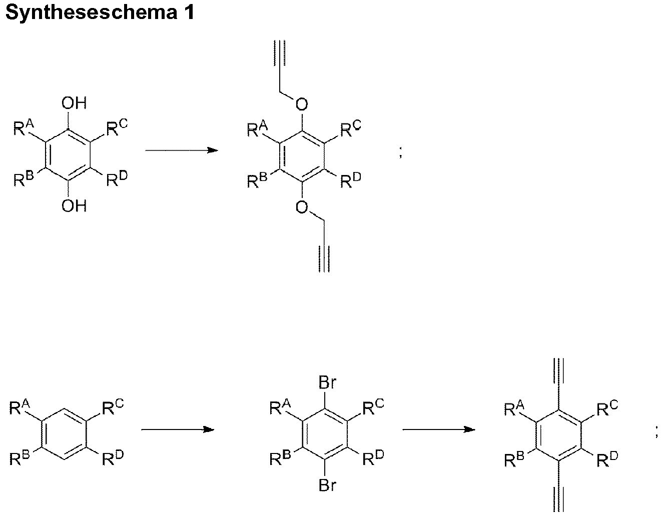

Die erfindungsgemäßen Polymere gemäß den chemischen Strukturen **(I)** und **(II)** können durch dem Fachmann geläufige Polymerisationsmethoden wie der Synthese von Polyacetylenen und deren Abwandlungen aus den jeweiligen Monomeren **(I)', (II)'** und (**III**)' synthetisiert werden.

Es hat sich als vorteilhaft erwiesen, die Polymerisation in Gegenwart von Leitfähigkeitsadditiven wie zum Beispiel den nachfolgend beschriebenen Kohlenstoffmaterialien (und auch Ruß wie zum Beispiel "SuperP®") durchzuführen, wie in A. Vlad, J. Rolland, G. Hauffman, B. Ernould, J.-F. Gohy, ChemSusChem 2015, 8, 1692 - 1696 für andere Polymere beschrieben.

Die Polymerisation wird bevorzugt metallkatalysiert in einem Temperaturbereich von - 30 bis 150 °C, vorteilhaft in einem Temperaturbereich von 0 bis 100 °C, in einem Lösungsmittel und einer Reaktionszeit von 0.1 bis 100 Stunden unter der Verwendung eines Katalysators, wie beispielsweise einem Wilkinson-Katalysator, einem Ziegler-Natta-Katalysator, einem Luttinger-Katalysator, einem Molybdänkomplex, einem Wolframkomplex, einem Rhodiumkomplex oder einer elektrochemischen Polymerisationsmethode unter Verwendung von Nickelbromid durchgeführt. Für verwendete Lösungsmittel besteht keine Einschränkung. Bevorzugt sind organische Lösungsmittel, wie beispielsweise *N,N*'-Dimethylformamid, *N,N*'-Dimethylacetamid, Dimethylsulfoxid, *N-*Methylpyrrolidon, Dichlormethan, 1,2-Dichlorethan, Toluol, Xylol, Chlorbenzol, *o*-Dichlorbenzol.

Das erfindungsgemäße Polymer eignet sich insbesondere zur Verwendung als redoxaktives Elektrodenmaterial in einem elektrischen Ladungsspeicher, bevorzugt zur Speicherung elektrischer Energie, und noch bevorzugter als positives Elektrodenelement.

Noch bevorzugter ist das redoxaktive Elektrodenmaterial dabei als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.

Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die Ionenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher Ionenleitfähigkeit (*"gel electrolyte"* oder *"solid state elctrolyte")* sein. Bevorzugt ist er aber eine oligomere oder polymere Verbindung. Ist der Elektrolyt flüssig, so setzt er sich insbesondere aus einem oder mehreren Lösungsmitteln und einem oder mehreren Leitsalzen zusammen.
Das Lösungsmittel der Elektrolyten umfasst bevorzugt unabhängig voneinander eines oder mehrere Lösungsmittel mit hohem Siedepunkt und hoher Ionenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f Ganzzahlen in Abhängigkeit der Ladung von M und An sind; a und b sind Ganzzahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet. Bevorzugtes Kation ist Lithium.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻, Alkoholate, wie beispielsweise, *tert*-Butanolat oder *iso*-Propylalkoholat, aber auch Halogenide, wie Fluorid, Chlorid, Bromid sowie Iodid, verwendet. Bevorzugtes Anion ist Perchlorat, ClO₄⁻. Bevorzugtes Leitsalz ist somit LiClO₄.

Werden ionische Flüssigkeiten verwendet, können diese sowohl als Lösungsmittel des Elektrolyten, als Leitsalz aber auch als kompletter Elektrolyt verwendet werden.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.

Das Substrat des Elektrodenelements ist insbesondere ausgewählt aus leitfähigen Materialien, bevorzugt Metallen, Kohlenstoffmaterialien, Oxidsubstanzen.

Bevorzugte Metalle sind ausgewählt aus Platin, Gold, Eisen, Kupfer, Aluminium oder eine Kombination aus diesen Metallen. Bevorzugte Kohlenstoffmaterialien, sind ausgewählt aus Glaskohlenstoff, Graphitfolie, Graphen, Kohlenstofffelle. Bevorzugte Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO).

Die Oberflächenschicht des Elektrodenelements umfasst zumindest das erfindungsgemäße Polymer als redoxaktives Material zur Ladungsspeicherung sowie insbesondere zumindest ein Leitfähigkeitsadditiv und ein Bindeadditiv.

Das Leitfähigkeitsadditiv ist insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen)polystyrensulfonat (= PEDOT:PSS), Polyarcene ausgewählt.

Bindeadditive sind insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Das erfindungsgemäße Polymer wird dabei insbesondere in einem Elektrodenslurry auf das Substrat des Elektrodenelementes aufgebracht.
Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.
Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.

In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.

Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N*'-Dimethylformamid, *N,N*'-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 0.1 und 10 mg/ml, besonders bevorzugt zwischen 0.5 und 5 mg/ml.

Wird das Polymer dieser Erfindung als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb₂O₅, TiO₂, Li₄Ti₅O₁₂, und Li₂Ti₃O₇ ausgewählt sind, sowie organische redoxaktives Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Dieses Komposit kann wie oben beschrieben mit Hilfe eines Elektrodenslurrys durch ein bekanntes Verfahren zur Filmbildung als Schicht auf einem Substrat vorliegen.

### Abbildungen

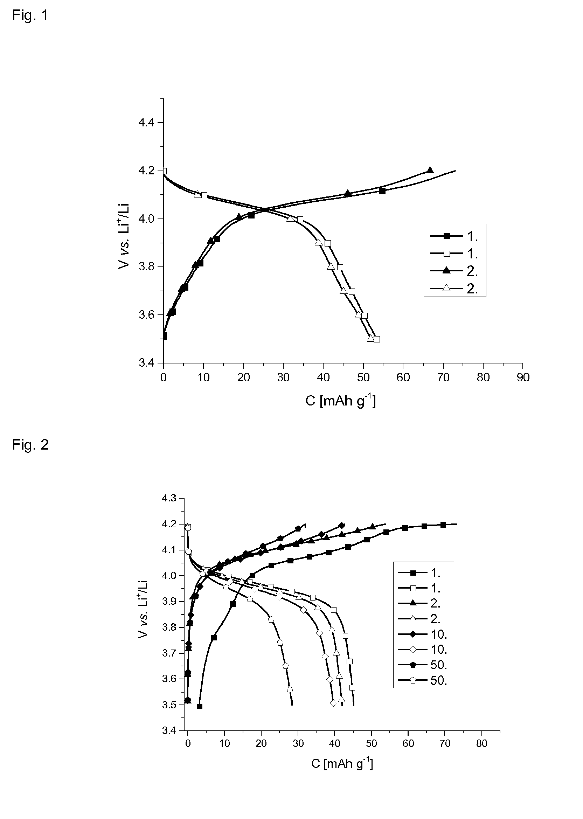

Abbildung 1 (= Fig. 1) gibt die gemessenen Spannungen V (y-Achse) über der Kapazität (x-Achse) einer mit **3** hergestellten, erfindungsgemäßen Elektrode nach 1 bzw. 2 Lade-/ Entladezyklen an (Ladegeschwindigkeit = 1 C, das heißt volles Laden in 60 Minuten; Abschnitt 4.1). Die gefüllten Kästchen im Schaubild bezeichnen die Ladezyklen, die leeren die Entladezyklen.

Abbildung 2 (= Fig. 2) gibt die gemessenen Spannungen V (y-Achse) über der Kapazität (x-Achse) einer mit **13** hergestellten, nicht erfindungsgemäßen Elektrode nach 1 bzw. 2 bzw. 10 bzw. 50 Lade- Entladezyklen an (Ladegeschwindigkeit = 1 C, das heißt volles Laden in 60 Minuten; Abschnitt 4.2). Die gefüllten Kästchen im Schaubild bezeichnen die Ladezyklen, die leeren die Entladezyklen.

Die Erfindung soll nachstehend anhand von in der Zeichnung dargestellten Ausführungsbeispielen zur Herstellung und Verwendung näher erläutert werden, ohne darauf beschränkt zu sein.

### Beispiele

### 1. Allgemeines

### 1.1 Abkürzungen

AIBN - Azobis(isobutyronitril); C - Kohlenstoffpartikel; Cl-Ph - Chlorbenzol;
DMAP - Dimethylaminopyridin; DMF - Dimethylformamid; NEt₃ - Triethylamin; ov - über Nacht; RT - Raumtemperatur; TBAClO₄ - Tetrabutylammoniumperchlorat;
TBAPF₆ - Tetrabutylammoniumhexafluorophosphat; THF - Tetrahydrofuran; Tol. - Toluol.

### 1.2 Meßmethoden

¹H und ¹³C NMR Spektren wurden mit einem Bruker AC 300 (300 MHz) Spektrometer bei 298 K aufgenommen. Für Cyclovoltammetrie und galvinostatische Experimente stand ein Biologic VMP 3 Potentiostat zur Verfügung. Größenausschlusschromatographie wurde an einem Agilent 1200 series System (Entgaser: PSS, Pumpe: G1310A, Autosampler: G1329A, Oven: Techlab, DAD Detector: G1315D, RI Detector: G1362A, Eluent: DMAc + 0.21% LiCl, 1 ml/min, Temperatur: 40 °C, Säule: PSS GRAM guard/1000/30 A) durchgeführt.

### 2. Erfinderische Beispiele

### 2.1 E1: Synthese und Polymerisation von 1,4-Di-tert-butyl-2,5-bis(prop-2-yn-1-yloxy)benzen 2

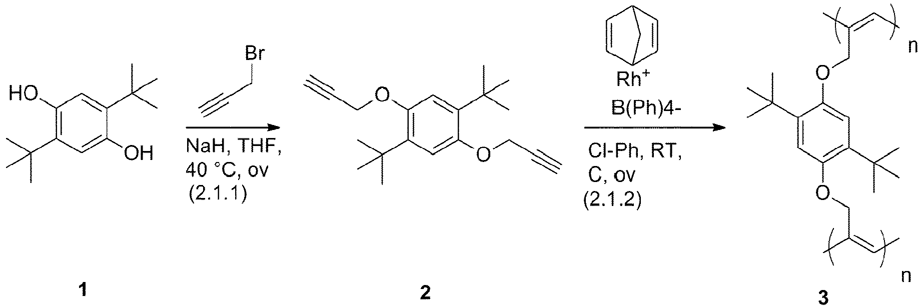

### 2.1.1 Synthese von 1,4-Di-tert-butyl-2,5-bis(prop-2-yn-1-yloxy)benzen 2

Eine 0.5 M Lösung von 2,5-Di-*tert*-butylhydrochinon **1** (2.22 g, 10 mmol) in THF wurde in eine eisgekühlte Suspension von NaH (1 g, 25 mmol, 60% Dispersion in Mineralöl) in 10 mL THF getropft und nach vollständiger Zugabe noch 1 Stunde bei Raumtemperatur gerührt. Anschließend wurde Propargylbromid (2.68 mL, 30 mmol, 80 w% in Toluol) zugegeben und die Reaktionsmischung für 16 Stunden bei 40 °C gerührt. Die Reaktion wurde mit Wasser gequencht und mit Diethylether extrahiert. Die organische Phase wurde mit MgSO₄ getrocknet, das Lösungsmittel im Vakuum entfernt und der Rückstand mittels Säulenchromatographie (Silicagel, CH₂Cl₂/Heptan, 1/1) gereinigt. Es wurden 2.66 g (8.9 mmol, 89%) **5** als blass gelber Feststoff erhalten.
¹H NMR (CDCl₃, 300 MHz, ppm): δ 7.00 (s, 2H), 4.70 (d, 4H), 2.52 (t, 2H), 1.28 (s, 18H).

### 2.1.2 Polymerisation von 1,4-Di-tert-butyl-2,5-bis(prop-2-yn-1-yloxy)benzen 2 in Gegenwart von Kohlenstoff zu 3

1,4-Di-*tert*-butyl-2,5-bis(prop-2-yn-1-yloxy)benzen **2** (40 mg, 0.13 mmol) und 80 mg Super P® wurden inertisiert und mit 4 mL Chlorbenzol dispergiert. Rhodiumnorbonadientetraphenylborat (5-mol%, 3.4 mg, 6.7 µmol) in 50 µL Chlorbenzol wurden durch 3 *Freeze-Pump-Thaw* Zyklen inertisiert. Anschließend wurde der Initiator zum Monomer gegeben und die Reaktion 16 Stunden bei Raumtemperatur gerührt. Das erhaltene Gel wurde direkt in eine Soxhlet-Apparatur überführt. Darin wurde es mit Acetonitril und Diethylether extrahiert und anschließend getrocknet. Dabei wurden 109 mg **3** als schwarzes Pulver erhalten.

Elementaranalyse: C 94.29%, H 2.49% entspricht etwa 28% Polymer im Komposit.

### 2.2 E2: Synthese und Polymerisation von 1,4-Di-tert-butil-2-(prop-2-yn-1-yloxy)-5-methoxy-benzen 5

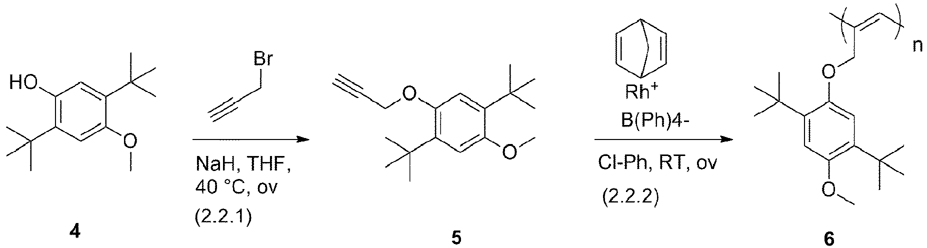

### 2.2.1 Synthese von 1,4-Di-tert-butil-2-(prop-2-yn-1-yloxy)-5-methoxy-benzen 5

Eine 0.5 M Lösung von 2,5-Di-*tert*-butyl-4-methoxyphenol **4** (2.36 g, 10 mmol) in THF wurde in eine eisgekühlte Suspension von NaH (600 mg, 15 mmol, 60% Dispersion in Mineralöl) in 8 mL THF getropft und nach vollständiger Zugabe noch 1 Stunde bei Raumtemperatur gerührt. Anschließend wurde Propargylbromid (1.34 mL, 15 mmol, 80 Gew.-% in Toluol) zugegeben und die Reaktionsmischung für 16 Stunden bei 40 °C gerührt. Die Reaktion wurde mit Wasser gequencht und mit Diethylether extrahiert. Die organische Phase wurde mit MgSO₄ getrocknet, das Lösungsmittel im Vakuum entfernt und der Rückstand mittels Säulenchromatographie (Silicagel, CH₂Cl₂/Heptan, 1/1) gereinigt. Es wurden 2.17 g (7.9 mmol, 79%) **5** als blass gelbes Öl erhalten.
¹H NMR (CDCl₃, 300 MHz, ppm): δ 7.00 (s, 1H), 6.92 (s, 1H), 4.70 (d, 2H), 3.65 (s, 3H), 2.50 (t, 1H), 1.24 (s, 18H).

### 2.2.2 Polymerisation von 1,4-Di-tert-butil-2-(prop-2-yn-1-yloxy)-5-methoxy-benzen 5 zu 6

Eine 1 M Lösung von **5** (192 mg, 0.7 mmol) in Chlorbenzol und eine Lösung von Rhodiumnorbonadientetraphenylborat (3 mol-%, 10.8 mg, 21 µmol) in 50 µL Chlorbenzol wurden durch 3 *Freeze-Pump-Thaw* Zyklen inertisiert. Anschließend wurde der Initiator zum Monomer gegeben und die Reaktion 16 Stunden bei Raumtemperatur gerührt. Die erhaltene viskose Lösung wurde in Acetonitril gefällt. Dabei wurden 174.7 mg (91 %) **6** als rotes Pulver erhalten.

### 3. Vergleichsbeispiele

### 3.1 V1: Synthese und Polymerisation von

### ((2,5-Di-tert-butyl-1,4-phenylen)bis(oxy))bis(propan-3,1-diyl)-bis(2-methylacrylat) 12

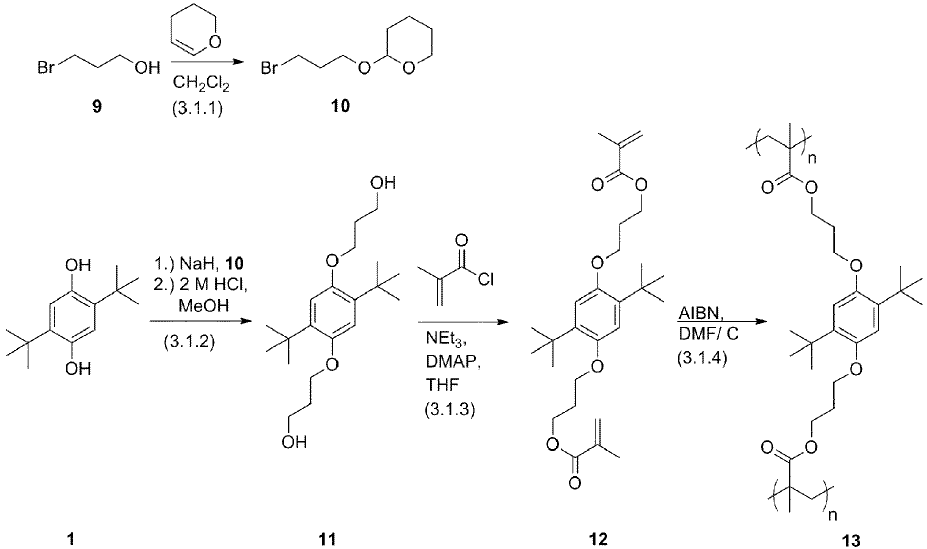

### 3.1.1 Synthese von 2-(3-Bromopropoxy)tetrahydro-2H-pyran 10

In eine 0.5 M Lösung von 1-Brom-3-hydroxypropan **9** (10 g, 72 mmol) in CH₂Cl₂ wurden *p*-Toluolsulfonsäurehydrat (1.37 g, 7.2 mmol) sowie Dihydropyran (9.8 mL, 107.9 mmol) gegeben und für 16 Stunden bei Raumtemperatur gerührt. Die Reaktion wurde mit Wasser extrahiert. Die organische Phase wurde mit MgSO₄ getrocknet, das Lösungsmittel im Vakuum entfernt und der Rückstand mittels Vakuumdestillation gereinigt. Es wurden 12.2 g (54.7 mmol, 76%) **10** als farbloses Öl erhalten.
¹H NMR (CDCl₃, 300 MHz, ppm): δ 4.52 (s, 1 H), 3.78 (m, 2H), 3.46 (m, 4H), 2.05 (m, 2H), 1.68 (m, 2H), 1.46 (m, 4H).

### 3.1.2 Synthese von 3,3'-((2,5-Di-tert-butyl-1,4-phenylen)bis(oxy))bis(propan-1-ol) 11

Zu einer 0.9 M Lösung von **1** (1 g, 4.5 mmol) in THF wurde eine eisgekühlte Suspension von NaH (450 mg, 11.2 mmol, 60% Dispersion in Mineralöl) in 10 mL THF getropft und nach vollständiger Zugabe noch 2 Stunden bei Raumtemperatur gerührt. Anschließend wurde **10** (5.02 g, 22.5 mmol) zugegeben und die Reaktionsmischung für 24 Stunden bei 50 °C gerührt. Die Reaktion wurde mit Wasser gequencht und mit Dichlormethan extrahiert. Die organische Phase wurde mit MgSO₄ getrocknet und das Lösungsmittel im Vakuum entfernt. Ohne weitere Aufreinigung wurde der Rückstand in 50 mL Methanol aufgenommen und 20 mL 2 M HCl hinzugegeben. Nach Abspaltung der Schutzgruppe (DC-Kontrolle) wurde das Produkt mit Dichlormethan extrahiert, über MgSO₄ getrocknet und das Lösungsmittel im Vakuum entfernt. Der Rückstand wurde mittels Säulenchromatographie (Silicagel, Hexan/Ethylacetat, 1:1) gereinigt. Es wurden 853 mg (2.5 mmol, 56%) **11** als weißer Feststoff erhalten.
¹H NMR (CDCl₃, 300 MHz, ppm): δ 6.85 (s, 2H), 4.10 (t, 4H), 3.92 (t, 4H), 2.09 (m, 4H), 1.37 (s, 18H).

### 3.1.3 Synthese von

### ((2,5-Di-tert-butyl-1,4-phenylen)bis(oxy))bis(propan-3,1-diyl)-bis(2-methylacrylat) 12

**11** (505 mg, 1.5 mmol) und DMAP (18 mg, 0.15 mmol) wurden inertisiert. Es wurden 10 mL trockenes THF, Triethylamin (820 µL, 5.9 mmol) und Methacryloylchlorid (570 µl, 5.9 mmol) unter Kühlung zugegeben und für 16 Stunden bei Raumtemperatur gerührt. Die Reaktion wurde mit Wasser gequencht und mit Dichlormethan extrahiert. Die organische Phase wurde mit MgSO₄ getrocknet und das Lösungsmittel im Vakuum entfernt. Der Rückstand wurde mittels Säulenchromatographie (Silicagel, Hexan/Ethylacetat, 4:1) gereinigt. Es wurden 565 mg (1.2 mmol, 80.6%) **12** als weißer Feststoff erhalten.
¹H NMR (CDCl₃, 300 MHz, ppm): δ 6.83 (s, 2H), 6.12 (s, 2H), 5.56 (s, 2H), 4.39 (t, 4H), 4.07 (t, 4H), 2.21 (m, 4H), 1.95 (s, 6H), 1.37 (s, 18H).

### 3.1.4 Polymerisation von

### ((2,5-Di-tert-butyl-1,4-phenylen)bis(oxy))bis(propan-3,1-diyl)-bis(2-methylacrylat) 12 zu 13 in Gegenwart von Kohlenstoff

Monomer **12** (40 mg, 0.08 mmol), AlBN (0.7 mg, 0.004 mmol) und 80 mg SuperP®
(Kohlenstoffpartikel, erworben von Sigma Aldrich) wurden inertisiert. Anschließend wurde 2.5 ml trockenes Toluol zugegeben und die Reaktion für 54 Stunden bei 80 °C gerührt. Das Komposit wurde in Methanol gefällt und gewaschen. Dabei wurden 105 mg **13** als schwarzer Feststoff erhalten.

Elementaranalyse: C 92.06%, H 2.38% entspricht etwa 27% Polymer im Komposit.

### 3.2 V2: Synthese und Polymerisation von

### 3-(2,5-Di-tert-butyl-4-methoxyphenoxy)propylmethacrylat 15

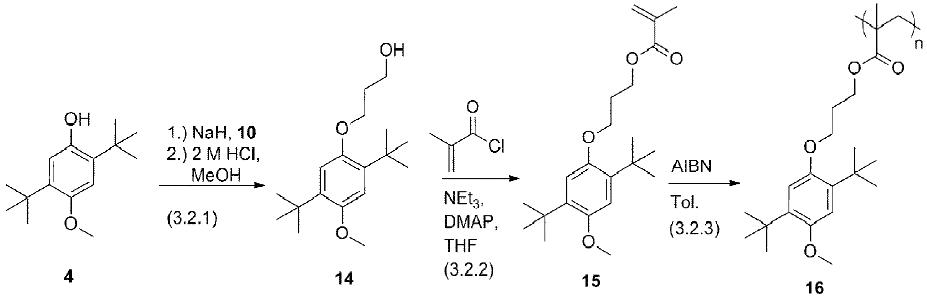

### 3.2.1 Synthese von 3-(2,5-Di-tert-butyl-4-methoxyphenoxy)propan-1-ol 14

Eine 0.8 M Lösung von **4** (2 g, 8.5 mmol) in THF wurde in eine eisgekühlte Suspension von NaH (507 mg, 12.7 mmol, 60% Dispersion in Mineralöl) in 10 mL THF getropft und nach vollständiger Zugabe noch 2 Stunden bei Raumtemperatur gerührt. Anschließend wurde **10** (5.66 g, 25.4 mmol) zugegeben und die Reaktionsmischung für 48 Stunden bei 50 °C gerührt. Die Reaktion wurde mit Wasser gequencht und mit Dichlormethan extrahiert. Die organische Phase wurde mit MgSO₄ getrocknet und das Lösungsmittel wurde im Vakuum entfernt. Der Rückstand wurde in 50 mL Methanol aufgenommen und 20 mL 2 M HCl hinzugegeben. Nach erfolgreicher Abspaltung der Schutzgruppe wurde das Produkt mit Dichlormethan extrahiert, über MgSO₄ getrocknet und das Lösungsmittel im Vakuum entfernt. Der Rückstand wurde mittels Gelfiltration (Silicagel, Hexan/Ethylacetat, 4:1) gereinigt. Es wurden 1.62 g (5.5 mmol, 65%) **14** als weißer Feststoff erhalten.
¹H NMR (CDCl₃, 300 MHz, ppm): δ 6.84 (d, 2H), 4.11 (t, 2H), 3.92 (t, 2H), 3.81 (s, 3H), 2.09 (m, 2H), 1.37 (d, 18H).

### 3.2.2 Synthese von 3-(2,5-Di-tert-butyl-4-methoxyphenoxy)propylmethacrylat 15

**14** (500 mg, 1.7 mmol) und DMAP (20.8 mg, 0.17 mmol) wurden inertisiert. Es wurden 10 mL trockenes THF, Triethylamin (940 µl, 6.8 mmol) und Methacryloylchlorid (660 µl, 6.8 mmol) unter Kühlung hinzugegeben und für 16 Stunden bei Raumtemperatur gerührt. Die Reaktion wurde mit Wasser gequencht und mit Dichlormethan extrahiert. Die organische Phase wurde mit MgSO₄ getrocknet und das Lösungsmittel im Vakuum entfernt. Der Rückstand wurde mittels Säulenchromatographie (Silicagel, Hexan/Ethylacetat, 4:1) gereinigt. Es wurden 545 mg (1.5 mmol, 88.5%) **15** als weißer Feststoff erhalten.
¹H NMR (CDCl₃, 300 MHz, ppm): δ 6.83 (d, 2H), 6.12 (s, 1H), 5.56 (s, 1H), 4.39 (t, 2H), 4.07 (t, 2H), 3.80 (s, 3H), 2.21 (m, 2H), 1.95 (s, 3H), 1.36 (d, 18H).

### 3.2.3 Polymerisation von 3-(2,5-Di-tert-butyl-4-methoxyphenoxy)propylmethacrylat 15 zu 16

Eine 0.5 M Lösung von **15** (100 mg, 0.275 mmol) in trockenem Toluol und AIBN (1.72 mg, 0.13 mmol) wurden für 90 min mit Argon entgast. Die entgaste Lösung rührte für 16 Stunden bei 80 °C. Das Polymer wurde in Methanol ausgefällt. Dabei wurden 65 mg (0.18 mmol, 64.5%) **16** als weißer Feststoff erhalten.

### 4. Herstellung der Elektroden

### 4.1 Herstellung einer Elektrode mit 3 (erfindungsgemäßes Beispiel)

**3** (hergestellt wie in Abschnitt 2.1.2 beschrieben) wurde im Mörser zu einem feinen Pulver verarbeitet. Anschließend wurde zu 90 mg **3** und 10 mg Poly(vinylidenfluorid) (PVDF; Sigma Aldrich als Bindeadditiv) 1 mL NMP (*N*-Methyl-2-pyrrolidon) gegeben und es wurde in einem Mörser fünfzehn Minuten durchmischt, bis eine homogene Paste entstand. Diese wurde unter Anwendung einer Streichmessermethode bzw. unter Zuhilfenahme einer Rakel auf Aluminiumfolie (15 µm, MIT Corporation) aufgebracht und die Elektrode für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithium Anode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC, DMC 3/7, 0.5 M LiClO₄) gefüllt und mit dem Deckel abgedichtet bevor sie mit einer elektrischen Pressmaschine (MIT Corporation MSK-100D) versiegelt wurde.
Im ersten Entladezyklus zeigt die Batterie eine Kapazität von 52 mAh/g (58% der theoretisch möglichen Kapazität), nach 2 Lade/Entladezyklen zeigt die Batterie immer noch eine Kapazität von mehr als 50 mAh/g (Abbildung 1 = Fig. 1).

### 4.2 Herstellung einer Elektrode mit 13 (Vergleichsbeispiel)

**13** (hergestellt wie in Abschnitt 3.1.4 beschrieben) wurde im Mörser zu einem feinen Pulver verarbeitet. Anschließend wurde zu 90 mg **13** und 10 mg Poly(vinylidenefluorid) (PVDF; Sigma Aldrich als Bindeadditiv) 1 mL NMP (*N*-Methyl-2-pyrrolidon) gegeben und es wurde in einem Mörser fünfzehn Minuten durchmischt, bis eine homogene Paste entstand. Diese wurde unter Anwendung einer Streichmessermethode bzw. unter Zuhilfenahme einer Rakel auf Aluminiumfolie (15 µm, MIT Corporation) aufgebracht und die Elektrode für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithium Anode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC, DMC 3/7, 0.5 M LiClO₄) gefüllt und mit dem Deckel abgedichtet bevor sie mit einer elektrischen Pressmaschine (MIT Corporation MSK-100D) versiegelt wurde.
Im ersten Entladezyklus zeigt die Batterie eine Kapazität von 45 mAh/g (80% der theoretisch möglichen Kapazität), nach 50 Lade/Entladezyklen zeigt die Batterie eine Kapazität von 29 mAh/g (Abbildung 2 = Fig. 2).

### 5. Ergebnisse

Aus dem Vergleich der Abbildung 1 mit Abbildung 2 ist ersichtlich, dass die erfindungsgemäßen Polymereelektroden sowohl eine höhere Entladespannung als auch Entladekapazität und folglich eine deutlich höhere spezifische Energie im Vergleich zu den im Stand der Technik erhaltenen besitzen. Dieser Effekt konnte über mehrere Lade/ Entladezyklen beobachtet werden. Zusätzlich konnten die Polymere deutlich aufwandgeringer hergestellt werden.

## Patentansprüche

1. Polymer umfassend n¹ miteinander verknüpfte Wiederholungseinheiten der chemischen Struktur **(I)** oder n² miteinander verknüpfte Wiederholungseinheiten der chemischen Struktur **(II)** mit 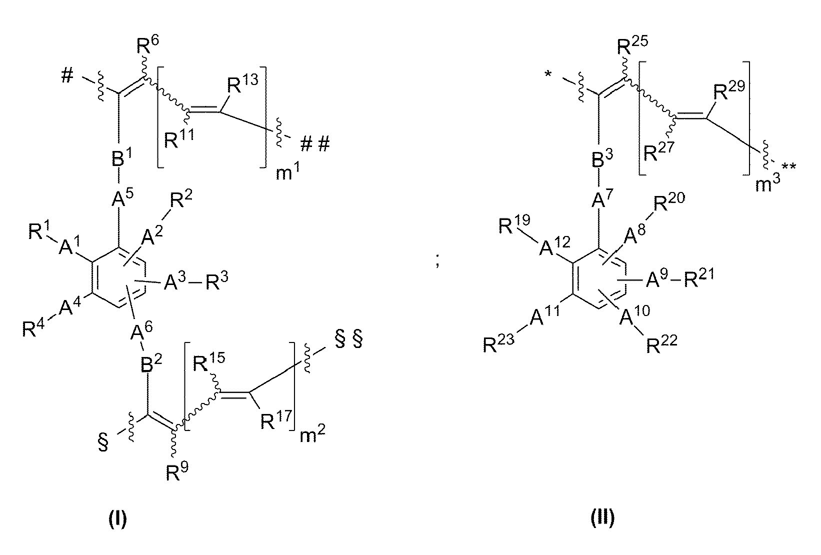 wobei n¹ und n² unabhängig voneinander jeweils eine ganze Zahl ≥ 4 sind,
wobei m¹, m², m³ unabhängig voneinander jeweils eine ganze Zahl ≥ 0 sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²², R²³, R²⁵, R²⁷, R²⁹ unabhängig voneinander jeweils aus der Gruppe bestehend aus
Wasserstoff, (hetero)aromatischer Rest,
gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
ausgewählt sind,
wobei mindestens zwei von A¹, A², A³, A⁴, A⁵, A⁶ jeweils für ein Sauerstoff- oder Schwefelatom stehen und die übrigen von A¹, A², A³, A⁴, A⁵, A⁶ jeweils für eine direkte Bindung stehen,
wobei mindestens zwei von A⁷, A⁸, A⁹, A¹⁰, A¹¹, A¹² jeweils für ein Sauerstoff- oder Schwefelatom stehen und die übrigen von A⁷, A⁸, A⁹, A¹⁰, A¹¹, A¹² jeweils für eine direkte Bindung stehen,
und wobei mindestens zwei in *ortho*-Stellung zueinander stehende Reste der Reste R¹, R², R³, R⁴ und/oder mindestens zwei in *ortho*-Stellung zueinander stehende Reste der Reste R¹⁹, R²⁰, R²¹, R²², R²³ jeweils auch durch mindestens einen (hetero)aromatischen Ring oder gegebenenfalls mit mindestens einer Gruppe ausgewählt aus Nitrogruppe, -NH₂, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können,
und wobei der Rest R¹ im Falle dass A¹ = direkte Bindung, der Rest R² im Falle dass A² = direkte Bindung, der Rest R³ im Falle dass A³ = direkte Bindung, der Rest R⁴ im Falle dass A⁴ = direkte Bindung, der Rest R¹⁹ im Falle dass A¹² = direkte Bindung, der Rest R²⁰ im Falle dass A⁸ = direkte Bindung, der Rest R²¹ im Falle dass A⁹ = direkte Bindung, der Rest R²² im Falle dass A¹⁰ = direkte Bindung, der Rest R²³ im Falle dass A¹¹ = direkte Bindung sowie die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -COOR³⁶, -C(=O)NHR³⁷, -NR³⁸R³⁹, wobei R³⁶, R³⁷, R³⁸, R³⁹ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
ausgewählt sein können,
und wobei die Reste R⁶, R⁹, R¹¹, R¹³, R¹⁵, R¹⁷, R²⁵, R²⁷, R²⁹ unabhängig voneinander auch ein Rest der Formel -O-R⁴⁰, wobei R⁴⁰ ein gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei B¹ im Falle dass A⁵ = O oder S, B² im Falle dass A⁶ = O oder S, B³ im Falle dass A⁷ = O oder S unabhängig voneinander aus der Gruppe bestehend aus
direkte Bindung,
&-(X¹)ₚ₁-[C=X²]ₚ₂-(X³)ₚ₃-B⁵-(Y²)_{q2}-[C=Y¹]_{q1}-&&,
&-(Y³)_{q3}-(C=Y⁴)-&&,
ausgewählt sind,
und wobei B¹ im Falle dass A⁵ = direkte Bindung, B² im Falle dass A⁶ = direkte Bindung, B³ im Falle dass A⁷ = direkte Bindung unabhängig voneinander aus der Gruppe bestehend aus
&-(X⁴)ₚ₄-[C=X⁵]ₚ₅-(X⁶)ₚ₆-B⁶-(Y⁷)_{q6}-[C=Y⁶]_{q5}-(Y⁵)_{q4}-&&,
&-(Y¹⁰)_{q9}-(C=Y⁹)_{q8}-(Y⁸)_{q7}-&&,
wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei X², X⁵, Y¹, Y⁴, Y⁶, Y⁹ unabhängig voneinander ausgewählt aus der Gruppe bestehend aus Sauerstoff, Schwefel sind,
wobei X¹, X³, X⁴, X⁶, Y², Y³, Y⁷, Y¹⁰ unabhängig voneinander ausgewählt aus der Gruppe bestehend aus O, S, NH, N-Alkyl sind,
wobei Y⁵, Y⁸ aus NH, N-Alkyl ausgewählt ist,
wobei B⁵, B⁶ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe,
Carbonsäureestergruppe, Carbonsäureamidgruppe, Sulfonsäureestergruppe, Phosphorsäureester aufweisender aliphatischer Rest sind,
ausgewählt sind,
und wobei "&&" für B¹ die zu A⁵ weisende Bindung bezeichnet, für B² die zu A⁶ weisende Bindung bezeichnet, für B³ die zu A⁷ weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft.

2. Polymer nach Anspruch 1, umfassend n¹ miteinander verknüpfte Wiederholungseinheiten der chemischen Struktur **(I)** oder n² miteinander verknüpfte Wiederholungseinheiten der chemischen Struktur **(II)** mit 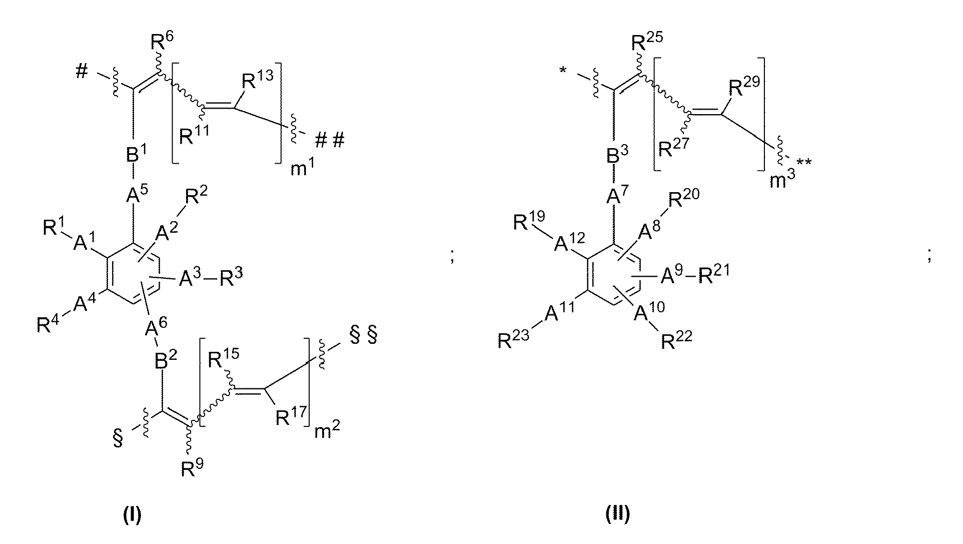 wobei n¹ und n² unabhängig voneinander jeweils eine ganze Zahl ≥ 4 sind,
wobei m¹, m², m³ unabhängig voneinander jeweils eine ganze Zahl ≥ 0 sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²², R²³, R²⁵, R²⁷, R²⁹ unabhängig voneinander jeweils aus der Gruppe bestehend aus
Wasserstoff, Phenyl, Benzyl,
gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
ausgewählt sind,
und wobei die Reste R¹¹, R¹³, R¹⁵, R¹⁷ unabhängig voneinander jeweils auch eine Gruppe der allgemeinen Struktur **(III)** mit 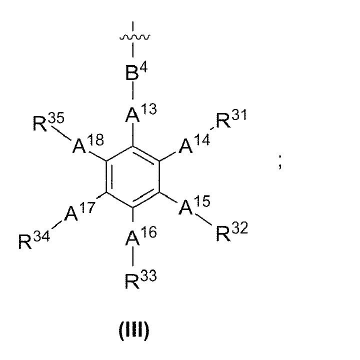 worin die Reste R³¹, R³², R³³, R³⁴, R³⁵ unabhängig voneinander die für R¹ angegebene Bedeutung haben,
sein können,
wobei mindestens zwei von A¹, A², A³, A⁴, A⁵, A⁶ jeweils für ein Sauerstoff- oder Schwefelatom stehen und die übrigen von A¹, A², A³, A⁴, A⁵, A⁶ jeweils für eine direkte Bindung stehen,
wobei mindestens zwei von A⁷, A⁸, A⁹, A¹⁰, A¹¹, A¹² jeweils für ein Sauerstoff- oder Schwefelatom stehen und die übrigen von A⁷, A⁸, A⁹, A¹⁰, A¹¹, A¹² jeweils für eine direkte Bindung stehen,
wobei mindestens zwei von A¹³, A¹⁴, A¹⁵, A¹⁶, A¹⁷, A¹⁸ jeweils für ein Sauerstoff- oder Schwefelatom stehen und die übrigen von A¹³, A¹⁴, A¹⁵, A¹⁶, A¹⁷, A¹⁸ jeweils für eine direkte Bindung stehen,
und wobei mindestens zwei in *ortho*-Stellung zueinander stehende Reste der Reste R¹, R², R³, R⁴ und/oder mindestens zwei in *ortho*-Stellung zueinander stehende Reste der Reste R¹⁹, R²⁰, R²¹, R²², R²³ und/oder mindestens zwei in *ortho*-Stellung zueinander stehende Reste der Reste R³¹, R³², R³³, R³⁴, R³⁵ jeweils auch durch mindestens einen (hetero)aromatischen Ring oder gegebenenfalls mit mindestens einer Gruppe ausgewählt aus Nitrogruppe, -NH₂, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können,
und wobei der Rest R¹ im Falle dass A¹ = direkte Bindung, der Rest R² im Falle dass A² = direkte Bindung, der Rest R³ im Falle dass A³ = direkte Bindung, der Rest R⁴ im Falle dass A⁴ = direkte Bindung, der Rest R¹⁹ im Falle dass A¹² = direkte Bindung, der Rest R²⁰ im Falle dass A⁸ = direkte Bindung, der Rest R²¹ im Falle dass A⁹ = direkte Bindung, der Rest R²² im Falle dass A¹⁰ = direkte Bindung, der Rest R²³ im Falle dass A¹¹ = direkte Bindung, der Rest R³¹ im Falle dass A¹⁴ = direkte Bindung, der Rest R³² im Falle dass A¹⁵ = direkte Bindung, der Rest R³³ im Falle dass A¹⁶ = direkte Bindung, der Rest R³⁴ im Falle dass A¹⁷ = direkte Bindung, der Rest R³⁵ im Falle dass A¹⁸ = direkte Bindung sowie die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -COOR³⁶, -C(=O)NHR³⁷, -NR³⁸R³⁹, wobei R³⁶, R³⁷, R³⁸, R³⁹ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist,
ausgewählt sein können,
und wobei die Reste R⁶, R⁹, R¹¹, R¹³, R¹⁵, R¹⁷, R²⁵, R²⁷, R²⁹ unabhängig voneinander auch ein Rest der Formel -O-R⁴⁰, wobei R⁴⁰ ein gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei B¹ im Falle dass A⁵ = O oder S, B² im Falle dass A⁶ = O oder S, B³ im Falle dass A⁷ = O oder S, B⁴ im Falle dass A¹³ = O oder S unabhängig voneinander aus der Gruppe bestehend aus
direkte Bindung,
&-(X¹)ₚ₁-[C=X²]ₚ₂-(X³)ₚ₃-B⁵-(Y²)_{q2}-[C=Y¹]_{q1}-&&,
&-(Y³)_{q3}-(C=Y⁴)-&&,
ausgewählt sind,
und wobei B¹ im Falle dass A⁵ = direkte Bindung, B² im Falle dass A⁶ = direkte Bindung, B³ im Falle dass A⁷ = direkte Bindung, B⁴ im Falle dass A¹³ = direkte Bindung unabhängig voneinander aus der Gruppe bestehend aus
&-(X⁴)ₚ₄-[C=X⁵]ₚ₅-(X⁶)ₚ₆-B⁶-(Y⁷)_{q6}-[C=Y⁶]_{q5}-(Y⁵)_{q4}-&&,
&-(Y¹⁰)_{q9}-(C=Y⁹)_{q8}-(Y⁸)_{q7}-&&,
wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei X², X⁵, Y¹, Y⁴, Y⁶, Y⁹ unabhängig voneinander ausgewählt aus der Gruppe bestehend aus Sauerstoff, Schwefel sind,
wobei X¹, X³, X⁴, X⁶, Y², Y³, Y⁷, Y¹⁰ unabhängig voneinander ausgewählt aus der Gruppe bestehend aus O, S, NH, N-Alkyl sind,
wobei Y⁵, Y⁸ aus NH, N-Alkyl ausgewählt ist,
wobei B⁵, B⁶ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe,
Carbonsäureestergruppe, Carbonsäureamidgruppe, Sulfonsäureestergruppe, Phosphorsäureester aufweisender aliphatischer Rest,
ausgewählt sind,
und wobei "&&" für B¹ die zu A⁵ weisende Bindung bezeichnet, für B² die zu A⁶ weisende Bindung bezeichnet, für B³ die zu A⁷ weisende Bindung bezeichnet, für B⁴ die zu A¹³ weisende Bindung bezeichnet,
und wobei "&" für B¹ die Bindung bezeichnet, welche B¹ mit der Doppelbindung verknüpft, für B² die Bindung bezeichnet, welche B² mit der Doppelbindung verknüpft, für B³ die Bindung bezeichnet, welche B³ mit der Doppelbindung verknüpft, für B⁴ die Bindung bezeichnet, welche B⁴ mit der Doppelbindung verknüpft.

3. Polymer nach Anspruch 2, umfassend n¹ miteinander verknüpfte Wiederholungseinheiten der chemischen Struktur **(I)** oder n² miteinander verknüpfte Wiederholungseinheiten der chemischen Struktur **(II)** mit 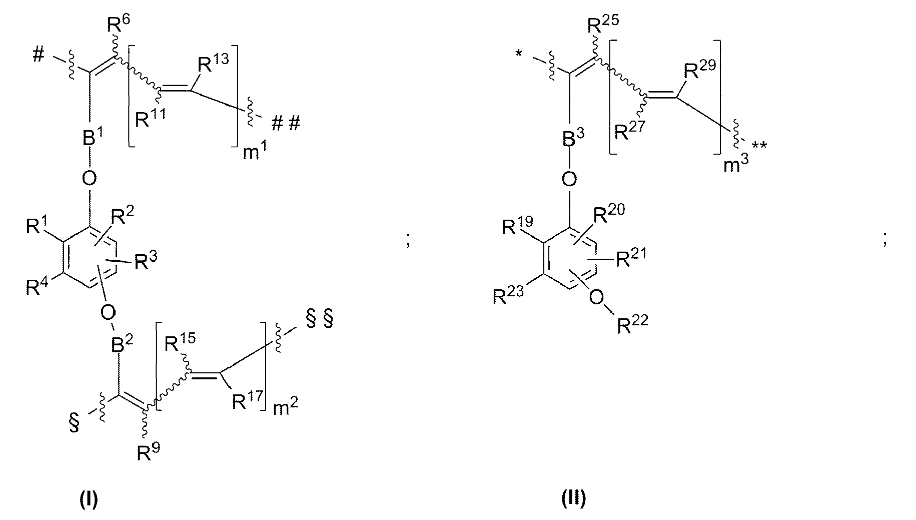 wobei n¹ und n² unabhängig voneinander jeweils eine ganze Zahl ≥ 4 und ≤ 5000 sind, wobei m¹, m², m³ unabhängig voneinander jeweils eine ganze Zahl ≥ 0 und ≤ 5000 sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²³, R²⁵, R²⁷, R²⁹ unabhängig voneinander jeweils aus der Gruppe bestehend aus
Wasserstoff, Alkylgruppe mit 1 bis 30 Kohlenstoffatomen,
ausgewählt sind,
und wobei R²² eine Alkylgruppe mit 1 bis 30 Kohlenstoffatomen ist,
und wobei die Reste R¹¹, R¹³, R¹⁵, R¹⁷ unabhängig voneinander jeweils auch eine Gruppe der allgemeinen Struktur **(III)** mit 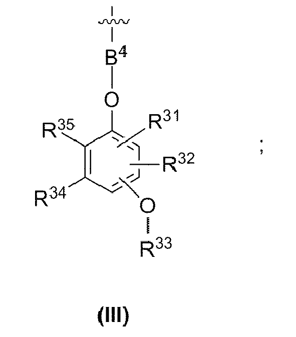 wobei die Reste R³¹, R³², R³⁴, R³⁵ unabhängig voneinander jeweils aus der Gruppe bestehend aus
Wasserstoff, Alkylgruppe mit 1 bis 30 Kohlenstoffatomen,
ausgewählt sind,
und wobei R³³ eine Alkylgruppe mit 1 bis 30 Kohlenstoffatomen ist,
sein können,
und wobei die Reste R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 30, Kohlenstoffatomen ist,
ausgewählt sein können,
wobei B¹, B², B³, B⁴ unabhängig voneinander aus der Gruppe bestehend aus
direkte Bindung,
&-(X¹)ₚ₁-[C=X²]ₚ₂-(X³)ₚ₃-B⁵-(Y²)_{q2}-[C=Y¹]_{q1}-&&,
&-(Y³)_{q3}-(C=Y⁴)-&&,
ausgewählt sind,
wobei p1, p2, p3 jeweils 0 oder 1 mit der Maßgabe, dass nicht gleichzeitig p1 = p3 = 1 und p2 = 0 ist, sind,
wobei q1, q2 jeweils 0 oder 1 sind, wobei wenn q1 = 0, dann q2 = 0,
wobei q3 = 0 oder 1 ist,
wobei X², Y¹, Y⁴ unabhängig voneinander ausgewählt aus der Gruppe bestehend aus Sauerstoff, Schwefel sind,
wobei X¹, X³, Y², Y³ unabhängig voneinander ausgewählt aus der Gruppe bestehend aus O, S sind,
und wobei B⁵ ausgewählt aus der Gruppe bestehend aus &-Phenylen-CH₂-&&, ein zweiwertiger, gegebenenfalls mindestens eine Gruppe ausgewählt aus Ether, Thioether, Aminoether aufweisender aliphatischer Rest ist,.

4. Polymer nach Anspruch 3, umfassend n¹ miteinander verknüpfte Wiederholungseinheiten der chemischen Struktur **(I)** oder n² miteinander verknüpfte Wiederholungseinheiten der chemischen Struktur **(II)** mit 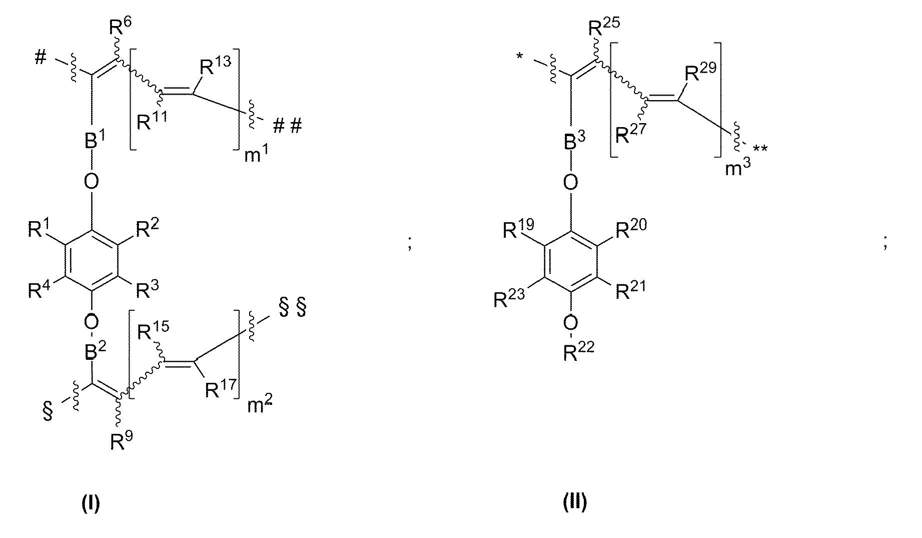 wobei n¹ und n² unabhängig voneinander jeweils eine ganze Zahl ≥ 10 und ≤ 1000, sind,
wobei m¹, m², m³ unabhängig voneinander jeweils eine ganze Zahl ≥ 0 und ≤ 1000, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴, R⁶, R⁹, R¹¹, R¹³, R¹⁵, R¹⁷, R¹⁹, R²⁰, R²¹, R²³, R²⁵, R²⁷, R²⁹ unabhängig voneinander jeweils aus der Gruppe bestehend aus Wasserstoff, Alkylgruppe mit 1 bis 8 Kohlenstoffatomen ausgewählt sind,
und wobei R²² eine Alkylgruppe mit 1 bis 8 Kohlenstoffatomen ist,
und wobei die Reste R¹¹, R¹³, R¹⁵, R¹⁷ unabhängig voneinander jeweils auch eine Gruppe der allgemeinen Struktur **(III)** mit 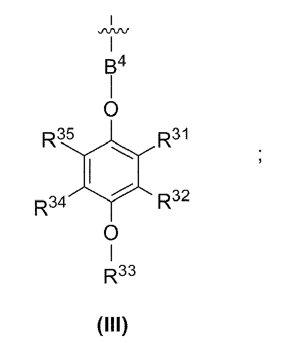 wobei die Reste R³¹, R³², R³⁴, R³⁵ unabhängig voneinander jeweils aus der Gruppe bestehend aus Wasserstoff, Alkylgruppe mit 1 bis 8 Kohlenstoffatomen ausgewählt sind, und wobei R³³ eine Alkylgruppe mit 1 bis 8 Kohlenstoffatomen ist,
sein können,
und wobei R⁶, R⁹, R¹¹, R¹³, R¹⁵, R¹⁷, R²⁵, R²⁷, R²⁹ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 8 Kohlenstoffatomen ist,
ausgewählt sein können,
wobei B¹, B², B³, B⁴ unabhängig voneinander aus der Gruppe bestehend aus
direkte Bindung,
&-(O)ₚ₁-[C=O]ₚ₂-(O)ₚ₃-B⁵-&&,
ausgewählt sind,
wobei p1, p2, p3 jeweils 0 oder 1 mit der Maßgabe, dass nicht gleichzeitig p1 = p3 = 1 und p2 = 0 ist, sind,
B⁵ eine Alkylengruppe mit 1 bis 30 Kohlenstoffatomen ist.

5. Polymer nach Anspruch 4,
wobei R¹ = R³, R² = R⁴, R¹⁹ = R²¹, R²⁰ = R²³, R³¹ = R³⁴, R³² = R³⁵.

6. Polymer nach Anspruch 5, wobei R¹ = R³ = H, R² = R⁴ = Alkylgruppe mit 1 bis 8 Kohlenstoffatomen, R¹⁹ = R²¹ = H, R²⁰ = R²³= Alkylgruppe mit 1 bis 8 Kohlenstoffatomen, R³¹ = R³⁴ = H, R³² = R³⁵ = Alkylgruppe mit 1 bis 8 Kohlenstoffatomen und B¹, B², B³, B⁴ unabhängig voneinander jeweils aus der Gruppe bestehend aus direkte Bindung, Methylen, Ethylen, n-Propylen, &- B⁵-CH₂-&&, wobei B⁵ = 1,4-Phenylen ist, ausgewählt sind.

7. Polymer nach Anspruch 6, wobei R¹ = R³ = H, R² = R⁴ = Alkylgruppe mit 1 bis 6 Kohlenstoffatomen, R¹⁹ = R²¹ = H, R²⁰ = R²³ = Alkylgruppe mit 1 bis 6 Kohlenstoffatomen, R³¹ = R³⁴ = H, R³² = R³⁵ = Alkylgruppe mit 1 bis 6 Kohlenstoffatomen.

8. Polymer nach Anspruch 7, wobei R¹ = R³ = H, R² = R⁴ = *tert*-Butylgruppe, R¹⁹ = R²¹ = H, R²⁰ = R²³= *tert*-Butylgruppe, R³¹ = R³⁴ = H, R³² = R³⁵= *tert*-Butylgruppe.

9. Verwendung der Polymere nach einem der Ansprüche 1 bis 8 als redoxaktives Elektrodenmaterial für elektrische Ladungsspeicher.

10. Verwendung der Polymere nach einem der Ansprüche 1 bis 8 in einem Elektrodenslurry für elektrische Ladungsspeicher.
